# EUROPEAN PATENT SPECIFICATION

(11) **EP 2 903 723 B1**
(45) Date of publication and mention of the grant of the patent: **17.05.2017**
(21) Application number: 13774251.6
(22) Date of filing: 30.09.2013
(51) Int. Cl.: B01D 61/36

(54) **MEMBRANE DISTILLATION SYSTEM AND PROCESS**
MEMBRANDESTILLATIONSSYSTEM UND -VERFAHREN
SYSTEME DE DISTILLATION MEMBRANAIRE ET PROCEDE

(30) Priority: 11.10.2012 NL 2009613; 11.10.2012 NL 2009614
(43) Date of publication of application: 12.08.2015
(73) Proprietor: Aquaver B.V., 5215 MK 'S-Hertogenbosch (NL)
(72) Inventor: MAESSEN, Ralph, NL-3047 AC Rotterdam (NL); KONIJNENDIJK, Edgar, NL-3047 AC Rotterdam (NL); HOLLERING, Robertus Wilhelmus Jacobus, NL-3047 AC Rotterdam (NL); WEIJDEMA, Hein, NL-3047 AC Rotterdam (NL)
(74) Representative: 2K Patentanwälte Blasberg Kewitz & Reichel
(86) International application number: PCT/NL2013/050696
(87) International publication number: WO 2014/058306

(56) References cited:
- WO-A1-2005/089914
- WO-A1-2007/054311
- WO-A1-2010/127818
- CN-A- 102 107 119
- DE-A1-102009 020 179

## Description

### FIELD OF THE INVENTION

The invention relates to a membrane distillation system comprising a heat transfer means, at least one membrane distillation module and a condenser, which distillation modules are pressure-wise coupled in series, such that each subsequent module operates at a lower pressure than a preceding module, wherein said at least one membrane distillation modules comprises:
- A liquid channel with a fluid entry and a fluid exit and a hydrophobic, vapor permeable membrane through which evaporated liquid may pass; and
- a vapor space adjacent to the liquid channel and separated therefrom through the hydrophobic, vapor permeable membrane, through which evaporated liquid may pass into the vapor space, which vapor space further comprises a condensation wall and a distillate exit for a distillate generated by means of condensation of the evaporated liquid.

The invention further relates to a membrane distillation process, wherein such a membrane distillation system is used for water purification, for air conditioning and/or for other liquid purification applications, such as the removal of water from ethanol.

### BACKGROUND OF THE INVENTION

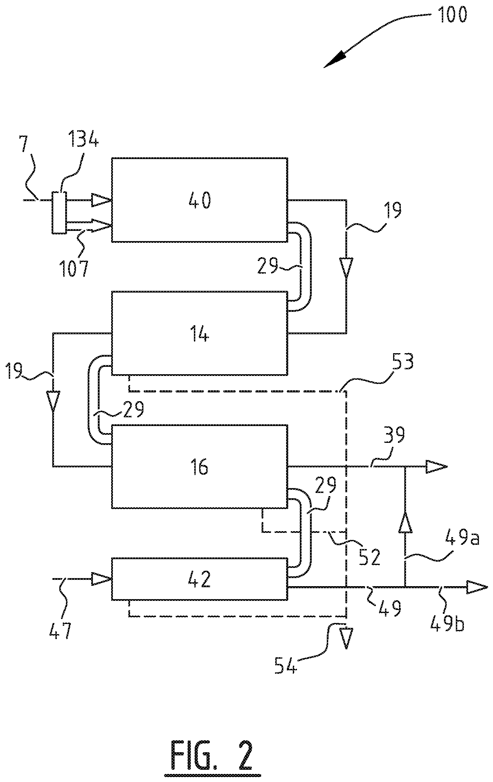

The use of membrane distillation for desalination of water has already been investigated in the 1980s. EP0094543A2 discloses a membrane distillation system as defined hereabove, and discloses a series of graphs in its Figures 11 to 18, in which the volume of distillate is shown as a function of temperature and underpressure. While the primary embodiment shows a single distillation module, it is clear from f.i. Fig. 2 that a plurality of membrane distillation modules may be put in series.

Further elaborations of said basic principles are known from WO-A 2005/089914, WO-A 2007/054311 and WO-A 2010/0127818. WO-A-2005/089914 discloses in its Fig. 2 an embodiment of a series coupling of several distillation modules. The first of said distillation modules mere generates vapour, which is used as a heat source in the second distillation module for the needed evaporation from the feed liquid, and then converted into distillate. The second distillation module again generates new vapour that is used as a heat source in the third distillation module and thus condensated into distillate. The vapour resulting from the third distillation module is condensated in a separate condenser module, particularly a cooler in the form of a heat exchanger. This type of membrane distillation with a sequence of distillation module, that are operated at an increasing underpressure (thus from high to low), is also known as vacuum membrane distillation.

In the embodiment of WO-A-2005/089914, a plurality of liquid channels and vapor spaces is put in parallel within one distillation module, so as to increase the effective surface area. This is moreover an effective design for heat exchange; a single vapour channel is present between two liquid channels, thus minimizing heat losses to the environment. If the liquid channel is designed to be narrow, the feed liquid can easily fill the liquid channel, leading to maximation 5 of the effective surface area.

An effective implementation providing such narrow liquid channels hereof is disclosed in WO-A 2010/0127818, in the form of a weldable and stackable frame, in which the required channels within one distillation module are defined. If desired, fluid and/or vapour connections between subsequent distillation modules may be implemented into the stack of frames. Each frame may be provided with foils chosen from a.o. hydrophobic membranes and condensation walls. Hence, a liquid channel is defined with a frame provided with a condensation wall foil on one side, and a hydrophobic membrane foil on the opposed side. As a result hereof, the system may have a membrane distillation module and a condenser that are integrated into one physical system. Under pressure channels are moreover implemented herein for ensuring the setting of the intended underpressure through the complete system.

WO-A 2007/054311 discloses furthermore an arrangement for controlling the underpressure in the series of distillation modules, and more particularly such that the full system runs at an underpressure. Thereto, an underpressure pipe system is shown extending to the vapour spaces of the membrane distillation modules, a condenser module as well as the preceding heat transfer means with a separate heat generator. Moreover, several underpressure control means in the form of U-tubes (typically siphons) are present, i.e. in the feed line, in the system's distillate exit and in the brine exit, , which further comprises a brine pump.

As shown most clearly in Fig. 5 of WO2007/054311, the cooling liquid is driven with a pump through a cooling channel of a separate condenser. This cooling channel is separated through a condensation wall from an adjacent vapour channel, in which distillate is generated. While the feed and the distillate are held at an underpressure, the cooling channel is at atmospheric pressure.

The known implementation has the disadvantage that the condenser needs to be a separate entity made in another technology than the preceding distillation modules. Foils that are typically used as membranes, or as condensation walls, may be damaged or torn, if a pressure difference over the foil exceeds a maximum value. The combination of a vapour channel at deep underpressure and a cooling channel at atmospheric pressure is highly sensitive to such damaging, particularly because the pressure difference is maintained over a long period and because variations in the pressure in the vapour channel may occur, for instance during start up, but also otherwise unexpectedly, such as due to power interruptions (and therewith changes in the pressure), malfunctioning of vacuum pumps, ageing of the system, or for any other reason.

It would be however desirable to integrate the condenser with the preceding distillation modules, for instance on the basis of the technology shown in WO2010/127818. Integration of modules into an assembly leads to shorter connections between the channels in adjacent modules, i.e. the connection of the liquid channels, and the connection of vapour space and vapour channel. As a result, underpressures may be defined and controlled better, which significantly increases the yield of the system.

One possible solution is that the cooling channel is made part of a closed system of cooling liquid. The cooling liquid runs then in a cycle between the condenser and a separate heat exchanger. In this configuration, the cooling liquid in the cycle can be held at a predefined underpressure and be driven with a pump. Such a solution however results in additional components and complexity. Moreover, a closed system of liquid requires regularly inspection, so as to see whether the level of liquid is sufficient. This is particularly true when the membrane distillation system is used outside in a hot climate.

A conventional membrane distillation system is disclosed in document DE 10 2009 020 179 A1. The problem to be solved by the invention is to provide a more robust membrane distillation system with a reduced risk of damaging the condenser module.

### SUMMARY OF THE INVENTION

According to the invention, a membrane distillation process is provided wherein distillate is generated from a feed by means of evaporation to vapour in a first liquid channel, which vapour is removed through a membrane and subsequently condensed in a vapour channel, wherein heat transfer occurs from the vapour channel to any subsequent liquid channel, and wherein the evaporation of feed in the first liquid channel occurs upon heat transfer from a heating channel in which a vapour flow condenses.
The generation of the distillate comprises steps of:
- applying a system underpressure to at least one of the modules of the system, which system underpressure is forwarded to other modules through pressure communication;
- transferring heat into the heating channel, that is separated by a wall from an adjacent liquid channel of a first membrane distillation module;
- providing feed to a fluid entry of the first membrane distillation module, said feed entering the liquid channel and being heated by means of the transferred heat transmitted from the heating channel so as to evaporate feed liquid to vapour that may pass through a substantially fluid-impermeable, vapor permeable membrane into a vapor space coupled to a subsequent vapour channel;
- generating distillate and transferring heat to an adjacent liquid channel by means of condensation of the vapour passed into the subsequent vapour channel;
- repeatedly, in dependence of the number of distillation modules in use, transferring non-evaporated feed of the preceding membrane distillation module to a subsequent membrane distillation module, and generating distillate from vapour passed into a subsequent vapour channel, therewith transferring heat to a adjacent liquid channel, wherein the distillate of the last membrane distillation module is generated in a vapour channel of a condenser module against a cooling fluid running in a cooling channel of the condenser module,
- wherein an underpressure is applied to an outlet of the cooling channel, so that the cooling liquid is sucked through the condenser module by means of a pressure difference between an inlet and the outlet of the cooling channel of the condenser module, and
- wherein the non-evaporated and concentrated feed flowing from the last membrane distillation module is diluted with at least part of the cooling liquid that has passed the condenser module, and is then pumped away.
The present invention removes the need for separate pumps and reduces the vulnerability of the foil-based condensation wall. Rather operating the cooling system at constant pressure, the inventors have understood that the cooling liquid should be flowing under the driving force of suction, e.g. towards an underpressure that is applied to the outlet of the cooling channel. In this manner, the cooling liquid flows in an open system.
Use of an open system for the cooling liquid has important advantages, in that the components, but also the cooling liquid may be integrated in the rest of the system, i.e. be reused. The cooling liquid may for instance be reused, at least partially, as a feed source. It may alternatively or additionally be used for diluting the non-evaporated and concentrated feed flowing from the last membrane distillation module - the latter also known as brine.
For sake of clarity, the cooling liquid that has passed the cooling channel of the condenser module will be referred to as a warmed-up cooling liquid. Generally, the cooling liquid will indeed be warmed up in order to absorb the heat from the condensation wall. However, there may be conditions, such as during start up that there is no or no significant warming up of the cooling liquid. The term 'warmed-up cooling liquid' is nevertheless used in general.
The underpressure applied to the cooling channel could be applied directly from a vacuum pump, which could even be an independent vacuum pump. However, it appears beneficial that a single vacuum pump defines setting the underpressure throughout the system. It appears even more beneficial that the pressure in the cooling channel is set indirectly. This allows that any pressure variation in the system is also transmitted to the cooling channel, so as to harmonize the system. For sake of clarity, it is added that the term 'vacuum pump' is herein used to refer to a pump that is suitable to provide a relatively low pressure, such as for instance 100 mbar or lower.
In one preferred embodiment, any non-evaporated and concentrated feed, i.e. brine, is transferred to a low-pressure brine collector vessel. Furthermore, at least part of the cooling liquid is transferred into the brine collector vessel after passing the cooling channel of the condenser module. The combination of the brine with the cooling liquid results in a less concentrated brine that is reduced in temperature and typically has a higher vapour pressure. As a result, the brine may be pumped away more easily, and particularly with a lower risk of cavitation and the negative effects thereof on pump performance and lifetime. In one specific embodiment, use can be made of continuous or semi-continuous pumping, and more specifically using a frequency-controlled pump. This prevents or at least significantly reduces the number of times that the pump need to be started, which is a most sensitive moment for the generation of cavitation. Moreover, no separate vessel for cooling water is needed, nor a separate pump coupled to such a separate cooling water vessel for pumping the cooling water from the low pressure to higher pressure, such as atmospheric pressure. Particularly in this embodiment, the underpressure may thus be communicated to the brine collector vessel, particularly from the vapour channel of the condenser module. The communication of this low pressure along the path of the cooling liquid will then result in the pressure difference over the cooling channel of the condenser module, which provides a driving force for the cooling liquid. This coupling to a brine collector vessel has turned out 5 to be a suitable manner of limiting the pressure difference over the suitably foil-based condensation wall of the condenser module.
If the cooling liquid is coupled to the brine collector vessel, suitably a protection device is present for preventing flow of liquid from the brine collector vessel into the vapour channel of the condenser during a current interruption. Such a protection device is for instance implemented as a closing valve at the exit of the cooling channel, or as a closing valve of the said first connection. The flow into the vapour channel would be detrimental for the distillate quality. Moreover, the provision of typically salt brine into a vapour channel for distillate may well result in a contamination that is difficult to remove. The flow into the vapour channel may result through the pressure communication means between condenser module and brine collector vessel, if an overflow of the brine collector vessel occurs.
In an alternative embodiment, the warmed-up cooling liquid does not flow into a brine collector vessel. Separate pumping means are present. This embodiment is suitable for large systems requiring a large flow of cooling liquid. Small systems are for instance systems with a distillate output of up to 0.1 m³/hour or 0.2 m³/hour or even up to 0.5 m³/hour. Larger system are for instance systems of at least 0.3 m³/hour, suitably at least 0.5 m³/hour and preferably at least 1.0 m³/hour. Small systems are intended for individual households or groups of households. Larger systems are intended for industrial use and/or for facilities for a complete community, such as a village, institute, hotel, city, farm.
In one specific implementation, the pumping means for the warmed-up cooling liquid comprise a first pump for pumping from the underpressure to an overpressure, and a second pump of a jet pump type. The benefit hereof is that the jet pump may be suitably used as the system's vacuum pump, i.e. it may operate as a cryogenic pump.
The use of jet pumping has furthermore been found very beneficial, in that liquid with a temperature higher than 20 °C, particularly with a temperature of more than 25 °C up to 40 °C or even 50 °C may be used as cooling liquid. This was a rather unexpected finding, with a major benefit, since cold water is not available in many tropical locations in need for clean water. Even seawater in tropical locations is typically higher than 25 °C. The jet pump may additionally be used for pumping the brine to atmospheric pressure. It will be understood that two or more jet pumps may be coupled in parallel to each other and in series with the first pump, one as the system's vacuum pump and the other as the brine pump. A further advantage of using the jet pump as the brine pump is that no intermediate brine collector vessel is needed: the brine may directly be transported, as a continuous flow, to the jet pump.
Most suitably, an arrangement is made wherein a first and a second jet pump are combined, both of which are fed with cooling liquid. Moreover, brine is added to the first jet pump, while the system's underpressure is taken from the second jet pump. Herein, a pressure 5 communication line is coupled between said second jet pump and at least one module, suitably the condenser module.
In an even further implementation, a bypass line is provided around said jet pump, more particularly between the first pump and an outlet for the cooling liquid, such as a tank or open water, such as sea, canal, river or lake. The bypass is suitably provided with a valve that is controllable, but such valve may be left out after system optimization and be replaced by any means defining a flow through said bypass

Suitably, part of the warmed-up cooling liquid is used as a source for feed. Thereto, in one embodiment, the open system of cooling liquid comprise a network with a first connection to waste, for instance the brine collector vessel, and a second connection to a feed inlet of the system. Regulating means are present for setting a flow ratio between the first connection and the second connection. The regulating means are for instance embodied as a valve or restriction, and are more preferably arranged in the first connection, i.e. between a split point and the brine collector vessel. Since the pressure difference extends to the brine collector vessel, the regulating means may be embodied quite simply.
The heat transfer means of the present invention could be provided with a heat generator, such as known from WO2007/054311A1. Herein a separate circuit is provided with which steam is generated that is condensed in the heating channel and then recirculated. The feed then enters the assembly of the heat transfer module, the membrane distillation modules and the condenser module in the first membrane distillation modules. It is not excluded, when using such a separate circuit that the heat exchanging fluid is a fluid different from water.

Alternatively, heat is added to the feed. Feed then enters the heat transfer means, and produces sufficient steam in the heating channel so as to enable heat transfer to the adjacent liquid channel of first distillation module. The architecture of the present invention already supports this embodiment, in that the cooling liquid is both warmed up and decreased in pressure. It therewith can easily be pretreated for use as a feed. More preferably, feed is pretreated such that a two-phase feed is obtained. This has turned out to increase the system's efficiency significantly. Moreover, the distillate from this heating channel in the first distillation module may be added to the distillate output.
Preferably, the heat transfer means are embodied as a heat transfer module. Such a heat transfer module may be integrated with the one or more distillation modules into an assembly. The heat transfer module more suitably operates as a distillation module, in that steam is separated from liquid feed and transferred to a vapour channel adjacent to the liquid channel of the first distillation module. A condensation wall is present between said vapour channel and said liquid channel for optimum heat transfer.
Alternatives to the use of a heat transfer module are by no means excluded. 5 Steam could be injected directly into the vapour channel adjacent to the liquid channel, i.e. as supplied via a steam inlet. Furthermore, the heat transfer means could be embodied as a unit combined with a heat exchanger and to be located adjacent - either above, below or laterally adjacent- to one or more of the distillation modules. Preferably such unit is located substantially below one or more distillation modules, such that steam resulting therefrom is easily coupled into the said vapour channel. Rather than, or in addition to, taking the flow through the above mentioned second connection as the feed source, the liquid in the brine collector vessel could be used as a feed source. The advantage of using the liquid from the brine collector vessel is its lower pressure and higher temperature. However, the concentration of salts may be somewhat higher.
Further alternatives for generating heat to the heat transfer module are not excluded. A combination of both mentioned embodiments is not excluded either, for instance in that the cooling liquid is used as a feed source, and is optionally pretreated, but that additional steam is injected into the feed prior to and/or upon entry of the heat transfer module.
According to the invention, a membrane distillation system is provided, in which system, in use, a feed is converted into distillate and non-evaporated, concentrated feed, which system comprises:
- means for applying an underpressure to at least one module of the system, which underpressure is forwarded to other modules through pressure communication;
- a heat transfer means for the transfer heat into a heating channel, that is separated by a wall from an adjacent liquid channel;
- a series of membrane distillation modules, a first of which comprises the heating channel, the wall and the liquid channel, further comprising a feed entry and a feed exit and a substantially fluid-impermeable, vapor permeable membrane between said liquid channel and a vapor space, which vapor space is coupled to a vapour channel of a subsequent module, said vapour channel being provided with a condensation wall separating the vapour channel from a liquid channel of the subsequent module;
- a condenser module, which comprises a vapour channel for receiving said vapour, a condensation wall, and a cooling channel through which, in use, a cooling liquid flows,
- wherein in use feed enters the liquid channel through the feed entry and is heated by means of the transferred heat transmitted from the heating channel so as to evaporate feed liquid to vapour that may pass through the membrane into a vapor space coupled to a subsequent vapour channel for condensation at a condensation wall, so as to generate distillate and transfer heat to an adjacent liquid channel of a subsequent module, which distillate is generated in the at least one membrane distillation modules and in the condenser module,
- wherein the cooling channel constitutes part of an open cooling system, in which cooling liquid flows in use from an inlet to an outlet, under suction by means of a pressure difference, and
- wherein the outlet is held in use at an underpressure and wherein a pumping means is present for pumping cooling liquid at the outlet from the said underpressure at the outlet to a higher pressure, and
- wherein the system is configured for dilution of non-evaporated and concentrated feed flowing from the last membrane distillation module with at least part of the cooling liquid that has passed the condenser module, and for pumping away of the thus diluted non-evaporated feed.
Preferably, the underpressure in the brine collector vessel is derived from the underpressure in one of the modules of the system, more preferably in vapour channel of the condenser module, by means of pressure communication means.
In a further embodiment, a protection device is present for preventing overflow of the brine collector vessel in case of current interruption. An overflow of the brine collector vessel would result in flow of brine into the vapour channel through the pressure communication means. Such entrance of brine in the vapour channel inevitably leads to contamination of the distillate, and of a contamination of the vapour channel that is difficult to remove. A first embodiment of the protection device is an electric normally closed valve (V2). Another embodiment of the protection device is is a hydrophobic means installed in the pressure communication means (i.e. pressure line) between brine vessel and condenser. Examples of such hydrophobic means are for instance filters, membranes, but also coatings. Suitable results were obtained with a filter with a pore size of 0.1-0.4 microns turned out suitable.
Rather than a single distillate output, more than one output could be present, allowing different portions of the distillate to be collected separately. In a single distillate output, all distillate exits in the vapour channels are typically coupled to one distillate channel leading to a single distillate collector. In a system with a plurality of distillate output, more than one of such distillate channel and such distillate collector is present. Most suitably, a vapour channel has a single distillate exit to one of the distillate channels.
The system of the invention is suitably a small scale or medium scale system, and is for instance used for household applications for drinking water and the like. For household applications, a volume of water in drink water quality of 100 liter per day (1-10 liter per hour) may be sufficient. For larger applications, a throughput of 70 liters per hour is feasible, which may well be increased up to for instance 100-150 liter per hour.
The system suitably comprises rather conventional supplementary elements, such as vessels for storage, pumps for throughout of brine and distillate and filters and/or sieves for removal of particulates, biological organisms and the like.
Most suitably, the generated distillate is stored at reduced pressure, particularly a pressure lower than atmospheric pressure. The advantage of storage at reduced pressure is that risk of contamination of the distillate with bacteria and/or other microbiological contamination is reduced. Furthermore, such a system is preferably provided with reservoirs at different temperatures, so as to provide hot water for f.i. cooking, cold water for f.i. drinking and medium temperature water for f.i. washing, cleaning and the like. Such reservoirs with different temperatures are not merely beneficial for a user, but also, particularly in a hot and sunny environment, it tends to cost time to cool the distillate to a desired temperature. Hence, means and flows may be designed so as to ensure that water of a desired temperature is generated in a sufficient quantity. Thermostats for setting and controlling the desired temperature in a reservoir may be present.

According to a further aspect of the invention, that is most suitably combined with the preceding embodiments, the system comprises a brine collector vessel into which, in use, non-evaporated and concentrated feed from the liquid channel of a membrane distillation module flow. The brine pump is a frequency controlled pump for continuous pumping of the liquid out of the brine collector vessel, when the pump is in a pumping mode.
More particularly, the membrane distillation system according to this aspect of the invention comprises at least one membrane distillation module and a condenser module, in which, in use, a feed is converted into distillate and brine, which distillate is generated in the at least one membrane distillation modules and the condenser modules, and which brine flows at least from a last membrane distillation module that precedes the condenser module into a brine collector vessel, wherein a brine pump is present for pumping liquid from the brine collector vessel to a higher pressure,
Wherein the brine pump is a frequency controlled pump for continuous pumping of the liquid out of the brine collector vessel, when the pump is in a pumping mode.

According to again a further aspect of the invention, a method is provided comprising the steps of guiding non-evaporated feed from the last module to a brine collector vessel, and pumping the liquid out of the brine collector vessel occurs continuously, when the pump is in a pumping mode. Frequency-controlled pumping allows continuous or semi-continuous pumping.
More particularly, this method comprises the steps of:
- generating distillate from a feed by means of evaporation to vapour in at least one membrane distillation module and a condenser module to which vapour of a preceding, last membrane distillation module is transferred,
- removing non-evaporated, concentrated feed as brine at least from the last membrane distillation module to a brine collector vessel, and
- pumping the liquid from the brine collector vessel to a higher pressure,
wherein the pumping the liquid out of the brine collector vessel occurs continuously, when the pump is in a pumping mode.
The use of frequency-controlled pumping significantly reduces the effects of cavitation, which most strongly occur upon switching on a pump. As known per se, for instance from the field of marine engineering, cavitation is due to the phenomenon that vapour bubbles are formed and grow locally due to acceleration in the water inlet. The thermodynamically instable bubbles collapse after a short time, causing shock waves to occur. This cavitation reduces pump performance significantly and it reduces pump lifetime dramatically. Cavitation was found, in experiments, leading to this aspect of the invention, to make the brine pump that operates on a low pressure vulnerable.
The frequency control is preferably coupled to a sensor detecting a volume in the brine vessel (which may be a tank or a tube). Upon a detection of a volume reduction, the frequency of pumping is reduced, and vice versa. It will be understood that rather than detecting volume, use may be made of a system detecting a flow rate into the brine vessel. Sensors for volume detection, typically level detection, are known per se and suitably provide an electrical signal to a controller. Examples include mechanical-electrical sensors, optical sensors, capacitive sensors, magnetic sensors.
Frequency-controlled pumping is moreover useful in the context of the present system, because a variation in the brine flow is expected: the brine flow during steady-state production is likely to be significantly less than during start up. Typically, the reduction may be in the order of 30-70%. This aspect of the present invention is particularly suitable for systems with a relatively small distillate output of less than 1 m₃ per hour, such as 0.1, 0.3 or 0.5 m₃ per hour. Such systems are deemed suitable for a single household, or a couple of households. Use of drinking water of a single average household in the Netherlands was, in 2008, nearly 0.4 m₃ drinking water per day.

Such a capacity may be easily generated with a system having an output of 0.1 m₃ per hour. The pumping in accordance with the invention is more preferably carried out in one of at least three modes; in a first mode, the pump is off. In a second mode, the pump operation is frequency controlled. In a third mode, the pump operates at maximum frequency.
For specifying the pumping mode, and an appropriate pumping frequency in the second mode, suitably the level or the inflow of the brine collector vessel is sensed with one or more sensors. Suitable sensors are level sensors, and alternatively flow sensors. Most suitably, use is made of sensors for sensing a minimum level and an upper limiting level. The upper limiting level need not be the absolute maximum, but a limiting value above which another operation, for instance at maximum flow speed, is obtained.
Rather than relying on sensors only, the control may be operated via an algorithm in a controller, wherein a flow into the brine collector vessel is estimated on the basis of input parameters, such as the feed flow and optionally flow of cooling liquid.
The use of a brine collector vessel moreover has the advantage of buffering, and, in case of combining cooling liquid and brine, to obtain adequate mixing. Particularly, in one suitable embodiment, the brine originates from the last distillation module, whereas the pressure in the brine collector vessel is taken from the condenser. The brine flow will thus be at a higher pressurethan the inflow of warmed-up cooling liquid. Experiments have shown that artefacts occur, in this embodiment, when a brine collector vessel is left out.
In a most suitable embodiment, the brine flow is injected into the brine collector vessel at a position lower than the inflow of warmed-up cooling liquid, and more preferably below a usual upper level of the liquid in the brine collector vessel. Due to a tendency of warm liquid to rise, as since the brine is warmer than the cooling liquid, a tendency to countercurrent flow between the brine and the cooling liquid inside the brine collector vessel may occur. Such flow behaviour is very good for mixing of the two flows. Moreover, the brine has a tendency to evaporate, particularly in view of the lower pressure in the brine collector vessel. By injecting it below the cooling liquid, evaporation of brine is suppressed. Too much evaporation of brine might cause problems in the vacuum lines of the system.

According to another aspect of the invention, the invention relates to a vacuum membrane distillation process, wherein use is made of cooling liquid of elevated temperature, without giving rise to process instability and/or inherent process termination. According to this method. use is made of a pumping configuration that is feasible to pump away cooling liquid and moreover to apply vacuum (i.e. underpressure of sufficient extent, for instance less than 100 mbar) to the used membrane distillation system.. The elevated temperature of the cooling liquid is more suitably a temperature of at least 25 ₒC. Preferably, the method involves pumping the said cooling liquid from an underpressure to an relative to atmospheric pressure, which underpressure results in flow of cooling liquid through a cooling channel, and thereafter accelerating said cooling liquid. The acceleration is preferably achieved in means that operate on the basis of the outlet flow and pressure of pumping means used in the pumping step. Preferably, this outlet flow and pressure is such that is constitutes a pressure relative to atmospheric pressure. The accelerating step suitably is made to result in cooling of the cooling liquid that has warmed up during use. The accerelating step furthermore is arranged to apply the system's vacuum. More particularly, a jet pump is used in the acceleration step. This jetpump is advantageously driven on the basis of the outlet pressure and flow from the said pumping means.
More particularly this aspect of the invention relates to a membrane distillation process comprising the steps of:
- generating distillate from a feed by means of evaporation to vapour in at least one membrane distillation module and a condenser module to which vapour of a preceding, last membrane distillation module is transferred, said condenser module being provided with a flow of cooling liquid;
- removing non-evaporated, concentrated feed as brine at least from the last membrane distillation module;
- pumping said cooling liquid by means of a series arrangement of a first pump and a jet pump.
Preferably, this process is a vacuum membrane distillation process, wherein an underpressure is applied to any one module, and suitably the condenser module, and spread over the modules by means of pressure communication. More preferably, this underpressure is applied via a pressure line ending up at the jet pump. Even more preferably, use is made of a plurality of membrane distillation modules.
In a further implementation, the series arrangement comprises a first pump and a parallel arrangement of at least a first jet pump and a second jet pump. More preferably, the first jet pump is also used for pumping the brine, and then second jet pump is used for the said application of the system's underpressure. This implementation is particularly suitable for generation of potable water, wherein the brine is not valuable. Furthermore, the parallel arrangement may further include a bypass, particularly a bypass with a valve.
Herein, the first pump suitably sucks the cooling liquid through a cooling channel of the condenser module and pumps it up to a pressure about atmospheric pressure.
Specific embodiments discussed with respect to one aspect are also deemed applicable to another aspect of the invention, unless clearly contradictory. This further holds for the embodiments defined in the dependent claims.

### BRIEF INTRODUCTION OF THE FIGURES

These and other aspects of the invention will be further elucidated with reference to the Figures, which are purely diagrammatical and not drawn to scale, and wherein:
Fig .1 shows diagrammatically a general architecture in accordance with the prior art as shown in WO2005/089914A1;
Fig. 2 shows a schematical view according to one embodiment of the invention;
Fig. 3 shows a view corresponding to that of Fig. 2, but indicating the pressure operation of the system;
Fig. 4 shows a more detailed schematical view specifying sensors and valves for one embodiment,
Fig. 5 shows a more detailed schematical view specifying sensors and valves for an alternative embodiment;
Fig. 6 shows a more detailed schematical view for a third embodiment, and
Fig. 7-9 show schematic views similar to those of Fig. 4-6 for further embodiments comprising a jet pump.

### DETAILED DESCRIPTION OF ILLUSTRATED EMBODIMENTS

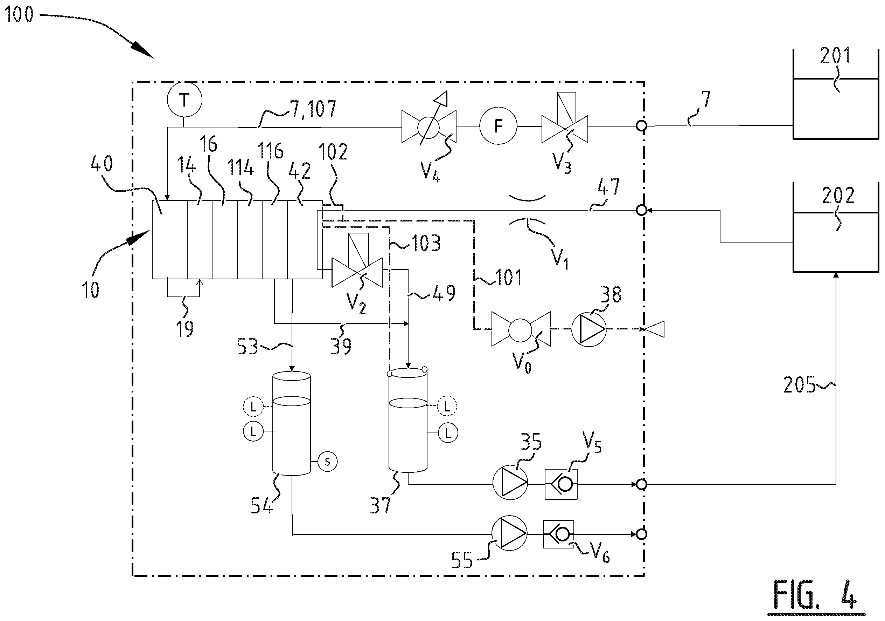

The Figures are not drawn to scale and are intended purely for illustrative purposes. Equal reference numerals in different figures refer to equal or corresponding parts.
Fig .1 shows diagrammatically a general architecture in accordance with the prior art as shown in WO2005/089914 A1. As shown herein, the membrane distillation system 100 comprises a heat transfer module 40, a first membrane distillation module 14, a second membrane distillation module 16 and a separate condenser 42 in the form of a heat exchanger, particularly so as to preheat the feed. As is indicated in the Fig. 4, 5 and 6, the said modules 40, 14, 16, 42 are suitably physically integrated in a modular assembly 10. Cross-connections for pressure, distillate and connections between vapour channel and vapour spaces as well as between the liquid channels may be implemented herein. This integration is deemed beneficial so as to keep heat within the unit and to reduce pressure leakages as much as possible.
Rather than a heat transfer module 40 suitable for integration into the modular system, any other heat transfer means could be used for the provision of heat in the form of condensable vapour, particularly steam. More particularly, the heat transfer means constitute a steam generator for generating steam. Source of the steam may be a separate source, for instance a circulating hot water circuit, but alternatively the feed itself. The heat transfer means is further also referred to as a vapor generator module.
Liquid, i.e. particularly an aqueous solution or a fluid mixture, enters the system via a liquid line 7. It is optionally preheated in a heat exchanger 34, but still at atmospheric pressure. Thereafter, it enters the vapor generator module 40 at the fluid entry 8. Here the fluid runs in a liquid channel 12 and evaporates under the influence of the available heat, and subsequently leaves this vapor generator module 40 at the fluid exit 9 as a concentrated fluid. The fluid is thereafter led via a liquid connection 19 to the first membrane distillation module 14, which it enters at the fluid entry 8, runs through in liquid channel 12 and leaves at the fluid exit 9 as a further concentrated fluid. In order to ensure that distillation occurs, the pressure in the first membrane distillation module 14 is lower than that in the vapor generator module 40. Subsequently, the fluid is led through a liquid connection 19 to the second membrane distillation module 16, which it enters at the fluid entry 8, passes through liquid channel 12 and leaves through the fluid exit 9 as an even further concentrated fluid. This fluid is also known as brine and removed via brine exit 39. The brine is in fact present at atmospheric pressure, rather than at an underpressure.
Vapor is generated by means of distillation of the fluid. The vapor enters a vapor space 23 that is separated from the liquid channel 12 by means of substantially fluid-impermeable membranes 20. The substantially fluid-impermeable membranes 20 are particularly hydrophobic membranes. Evidently, if the fluid is non-aqueous but rather an organic liquid, the fluid-impermeable membranes will be chosen to be impermeable for said organic fluid. The generated vapor is led from the vapor space 23 to the vapour chamber of a subsequent module - in casu the first distillation module 14 - via vapour connection 29 and arrives in the vapour channel 21. The vapour channel 21 is provided with at least one condensation wall 24. The vapour will condensate at this condensation wall 24 and be converted into distillate. Simultaneously, heat generated in the condensation process is transferred to the liquid channel 12, which is located adjacent to the condensation wall 24. In the present embodiment, the vapour channel 21 is bound by two condensation walls 24 on opposite sides. While being advantageous, this is not strictly necessary. Liquid evaporating from the liquid channel 12 in the first membrane distillation module 14 enters the vapor space 23 through said hydrophobic membranes 20, and flows through vapour connection 29 into the vapour channel 21 of the second membrane distillation module 16. Liquid evaporating from the liquid channel 12 in the last membrane distillation module - in this embodiment the second membrane distillation module 16 - enters the vapor space 23 through hydrophobic membranes 20, and flows through vapour connection 29 into the condenser unit 42. It is therein converted into liquid and thereafter brought to a desired pressure (typically a higher pressure) by means of pump 38 (typically a vacuum pump). Instead of being led away as a separate liquid stream, the condensate from the condenser 42 may be added to a distillate collector. Distillate is collected in a distillate collector 54, from which it is pumped to a higher pressure using a vacuum pump 36. The distillate collector 54 is coupled to the distillate exits 52 of the first and second membrane distillation modules 12, 14 via a (distillate) connection 53.
It is observed for sake of clarity, that the number of fluid channels 12 in parallel within one module 40, 14, 16 may be specified on the basis of the intended distillate volume. While the number of fluid channels 12 is the same in each module 40, 14, 16 of the present embodiment, this is not necessary. While the present embodiment shows a design wherein the vapour space 23 and the vapour channel 21 are mutually coupled through an external vapour connection 29, this is not necessary. Alternative embodiments are envisageable wherein the vapour space 23 and the vapour channel 21 are merged into a "vapour channel space". In such case, the vapour channel space is suitably bounded on one side by a membrane 20 and on the opposite side by a condensation wall 24.

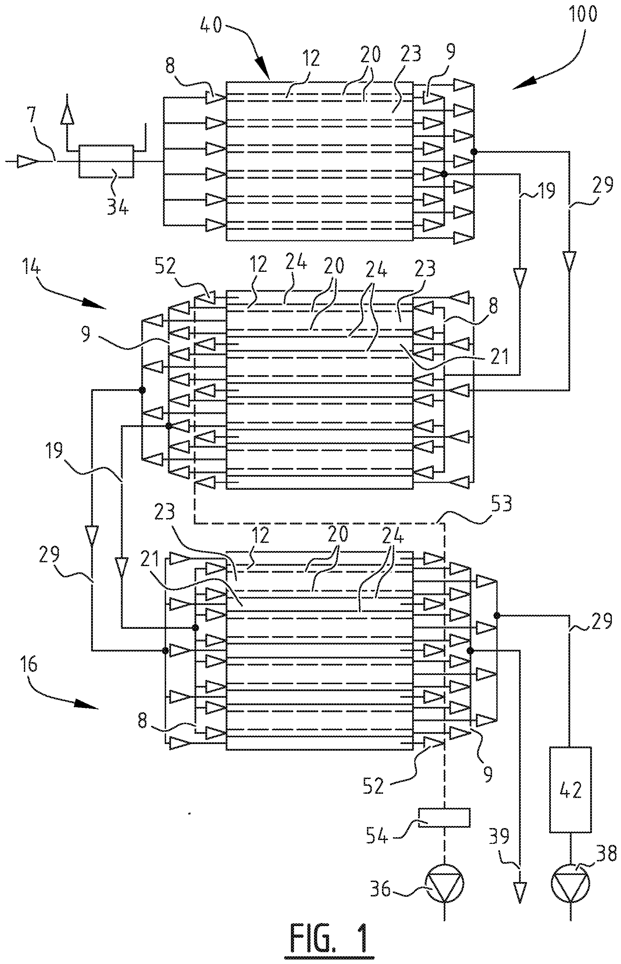

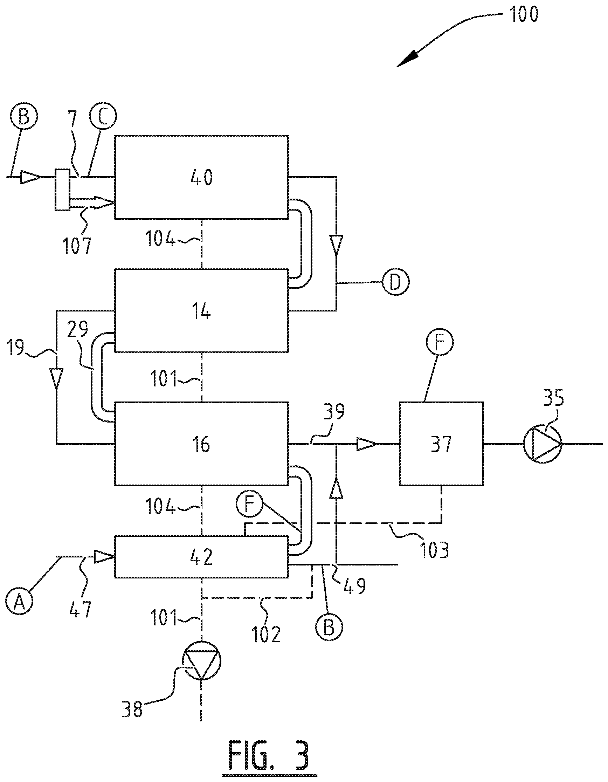

Fig. 2 and 3 show the general architecture in accordance with one embodiment of the present invention. Fig. 2 shows schematically the flows of liquid and vapour. Fig. 3 shows schematically the pressures in the system. For sake of clarity, details within the modules 40, 14, 16 are not shown, but are suitably corresponding to those shown in Figure 1. As shown in Fig 2, the system comprises a heat transfer module 40, distillation modules 14, 16 and a condenser 42. All these modules are suitably physically integrated into a single assembly. The drawn lines 7, 19, 39, 47, 49 indicate substantially liquid flows. The liquid feed 7 goes through the modules 40, 14, 16 and liquid connections 19. It is finally converted into brine 39. The cooling liquid 47 passes the condenser 42 and is obtained as warmed up cooling liquid 49. This warmed up cooling liquid 49 is suitably divided into a first stream 49a that is merged with the brine 39, and a second stream 49b for other purposes, for instance use as a feed 7.
The dotted line 52, 53 indicate distillate flows. In this example architecture, the distillate flow 52 from the first distillation module 14 is merged with the distillate flow 53 from the second distillation module 16 and the condenser to arrive at a distillate collector 54. However, as shown in Fig. 4-6, the distillate flow (pipe) 52 may be integrated in the modular assembly, such that merely a single distillate exit 53 is present.
Furthermore vapour lines 107, 29 are shown. In accordance with the present invention, the feed 7 is pretreated in a pretreatment module 134 to obtain a multi-phase feed, i.e. a two-phase feed comprising a feed vapour 107 and a liquid feed 7. The feed vapour 107 and the liquid feed 7 are indicated separately in this Figure 2 for sake of clarity, but may physically be provided in a single pipe.
The architecture shown in Fig. 3 corresponds to that of Fig.2. For sake of clarity, the distillate channels 52, 53 are omitted. Fig. 3 intends to represent the pressure balance in one embodiment according to the invention. Particularly, the system 100 operates at underpressure. The pressure is defined with a limited number of pumps 35, 38. The pressures within the system 10 will be set during use. The pressure build-up is controlled through a vacuum pump 38. This pump sets an underpressure F which is communicated through the system via lines 101-104. Line 101 communicates the pressure to a condenser channel of the condenser 42 (i.e. the vapour channel coupled to a preceding module). Line 102 indicates the clamping vacuum (Dutch: klemvacuüm) of the system. This line 102 is a branch of the main line 101, wherein vacuum pressure is brought between the individual modules for clamping them together. Line 103 communicates the pressure from the condenser 42 to a brine collector vessel 37. A further pump 35 is coupled thereto as an output valve. A similar pump, not shown, will be coupled a distillate collector vessel. Line 104 communicates the pressure from the condenser 42 to other modules 40, 14, 16. This communications do not imply that the underpressure is identical everywhere in the system 100. An actual pressure is obtained as a dynamic equilibrium on the basis of temperature, actual amount of vapour in dependence of flow rate and evaporation rate plus condensation rate.
The membrane distillation processes resulting in evaporation of feed 7, 19 result in a pressure difference between each module 40, 14, 16. The pressure E at the entrance of the second distillation module 16 is thus higher than the pressure F in the brine collector vessel 37. The pressure D at the entrance of the first distillation module 14 is again higher than the pressure E. The pressure C at the entrance of the heat transfer module 40 is again higher. For instance, the pressure C is 0.4 bar, pressure D is 0.3 bar, pressure E is 0.2 bar and pressure F is 0.1 bar. In accordance with the invention, the feed is pretreated in a pretreatment module, so as to obtain a two-phase feed 7, 107. During this pretreatment, the feed is suitably reduced in pressure from pressure B to pressure C. Pressure B is for instance 0.7 bar. This pressure B is also available at the warmed up cooling liquid 49, notwithstanding the communicated low pressure F. In fact, atmospheric pressure A may exist at the inlet 47 of cooling liquid. The cooling liquid is then driven through the condenser on the basis of the existing pressure difference, in which process the pressure is significantly lowered relative to the inlet pressure A.
In the shown implementation of Fig. 4, a throttle valve V1 is present, which lowers the Pressure B to a predefined maximum, for instance between 650 and 900 mbar, suitably in the range of 750-800 mbar. This maximum setting of the Pressure B reduces a risk of damage to any foils in the condenser, more particularly any polymer foils in the condenser that are used as a condensation wall. This damaging is a risk, since the unexpected pressure differences over the foils may arise in the course of starting up and/or in case of system interruptions or failures. It will be understood that the predefined maximum may depend on the foil type in use. Furthermore, if the condensation wall were made of steel, aluminium, or a heat-conducting ceramic, the provision of a predefined maximum is not deemed necessary.
Hence, the system of the shown embodiment of the present invention may be operated with a minimum number of pumps 35, 38. Surprisingly, the stability in the system can be properly controlled, and a high distillate output may be obtained. This high distillate output is deemed due to the combination of the underpressure in the system together with the provision of a two-phase feed 7, 107 that more effectively results in the creation of a vapour flow of sufficient magnitude through vapour connection 29 to the condensation wall in the first membrane distillation module 14.
Fig. 4 shows schematically a more detailed view of a system 100 according to one embodiment of the invention, with an emphasis on all valves and sensors. The shown embodiment relates to a system with a hot water vessel 201 and a cooling water vessel 202 that are external to the system. Such a situation is for instance foreseen for use in industrial environments, or in combination with cooling or heating facilities, such as solar panels and/or caves for water disposal.

According to the shown embodiment, the feed 7 is herein pretreated to lower its pressure by means of valve V4. Heating means may be added for bringing the feed 7 to the desired temperature. The feed then passes the membrane destillation assembly 10, comprising the heat transfer module 40, the condenser 42 as well as a series of membrane distillation modules 14, 16, 114, 116. The number of membrane distillation modules 14, 16, 114, 116 is open for design and typically ranges from 1 to 8, preferably 3 to 6. The distillate is thereafter removed via distillate channel 53 into a distillate collector vessel 54. The brine is removed via brine channel 39 to brine collector vessel 37. The brine 39 is merged with warmed up cooling liquid 49 that has passed the condenser 42 and was fed into the system from cooling water vessel 202 via cooling liquid line 47. The brine collector vessel 37 and the distillate collector vessel 54 are each coupled to a pump 35, 55 for pressure increase and transport. The brine is thereafter recirculated back into cooling water vessel 202 via recirculation line 205. It will be understood that alternatives are envisageable.
For an appropriate operation, a plurality of valves is provided. Valve V0 is a manual valve added for inspection purposes, in case of any leakage of vacuum (so that the desired underpressure is not reached). With this valve V0, on may find out easily, whether the leakage occurs in the assembly 10 or is related to the vacuum pump 38.
Valve V1 is a protection valve. It is defined so as to set a maximum to a pressure difference over the condenser 42. Therewith, polymer foils in the condenser 42 acting as condensation walls between a vapour channel and a cooling channel are protected, so as to prevent tearing, aging and the like. Valve V1 is for instance embodied as a restriction device.
Valve V2 is a further protection device for the event of any current interruption. The valve V2 prevents inflow of brine into the condenser via vacuum line 103, when for instance pump 35 does not work and hence an overflow of the brine collector vessel 37 occurs. In such case of current interruption, valve V2 will close automatically, therewith preventing any overflow of the brine collector vessel 37. This valve V2 is arranged in the line for the warmed up cooling liquid, since the cooling liquid flow tends to be larger than the brine flow. Evidently, a similar valve may be arranged in the brine line 39, if necessary for the prevention of any overflow. A further valve may be arranged so as to prevent, at least substantially, the backwards flow of warmed up cooling liquid after turning the apparatus off.
Valve V3 serves a similar function for the feed line 7.
Valve V4 is a device for setting the underpressure in the feed line 7 and therewith creating a two-phase feed 7 + 107. Suitably, this valve V4 is implemented as a throttle valve, but alternatives such as a tap or valve are not excluded. The setting of valve V4 is suitably controlled through a controller (not shown), on the basis of the sensor signals obtained. Alternatively, the setting may be carried manually, so as to ensuring sufficient heat. The setting does not need to be modified thereafter. A reset may however be done if the system suffers from scaling and/or fouling, affecting the total feed inflow, or when less heat is available.

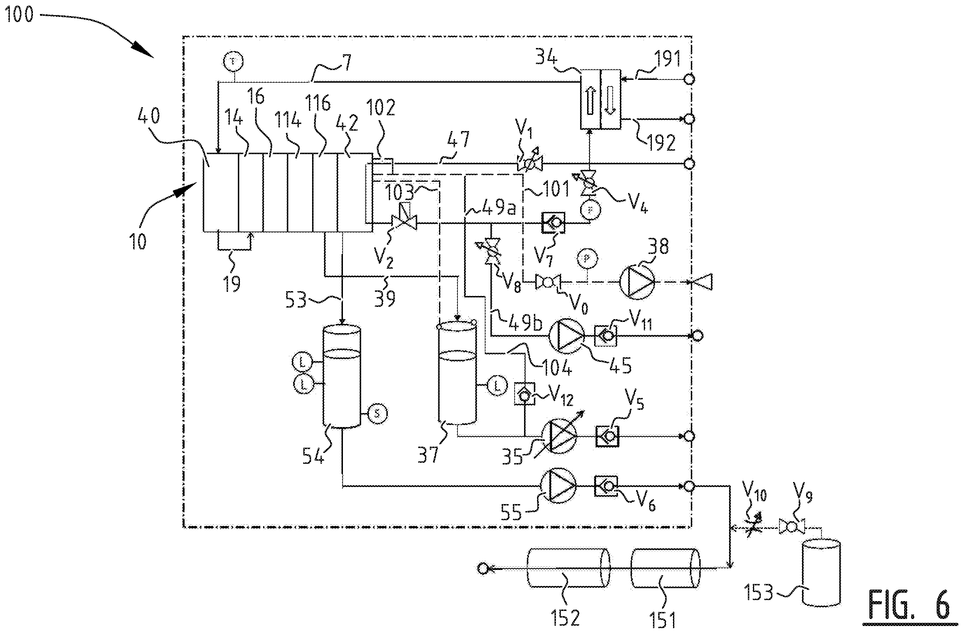

The flow sensor F is in a highly preferred implementation arranged upwards from the means for providing an underpressure, such as valve V4. If the flow sensor were placed downwards from the valve V4, vapour bubbles tend to make the sensing more complex, or could result in an inappropriate sensing result. The latter is caused in that the creation of steam in the feed flow accelerates the mixture. Hence, a mass or volume measurement is no longer representative. Valves V5 and V6 are used for preventing backwards flow due to the pressure difference, particularly after turning off the apparatus.

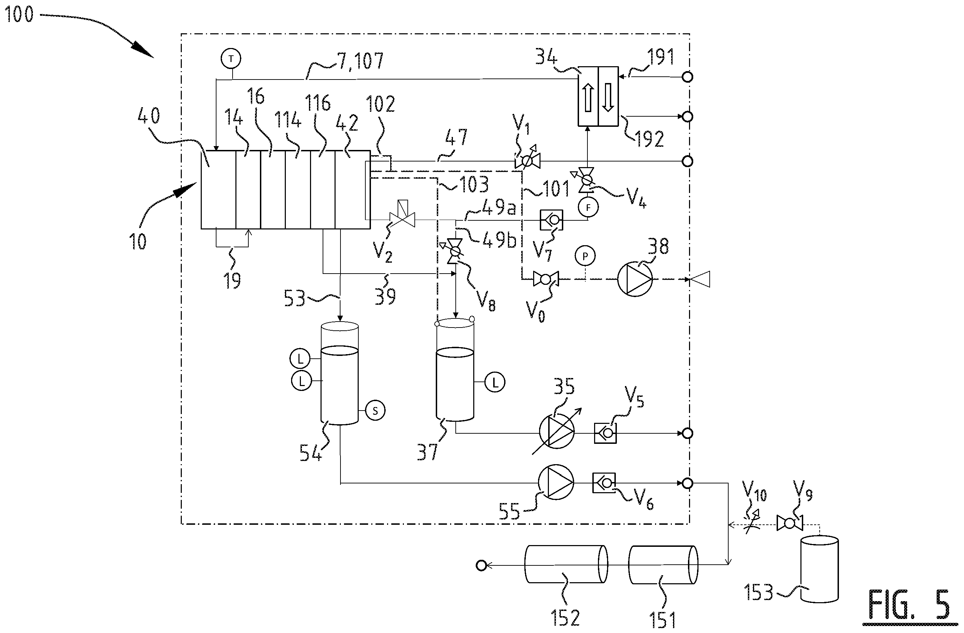

Fig. 5 shows a schematical view of another embodiment of the system 100 of the invention. According to this system, the part 49a of the warmed up cooling liquid 49 is recirculated into the feed 7. A further part 49b of the warmed-up cooling liquid 49 is combined with the brine 39 to the brine collector vessel 37. In this embodiment, the warmed up cooling liquid 49 is pretreated by means of valve V4 and a heat exchanger 34 to become a two-phase feed 7+107. The heat exchanger 34 is provided with a separate inlet 191 and an outlet 192 for the heat flow.
This configuration suitably includes two further valves. Valve V7 is a protection device so as to prevent backwards flow of warmed-up cooling liquid 49a after turning off the system, and/or in case of any current interruption.
Valve V8 is a device with which the flow rate ratio between the flows 49a and 49b can be set. This device is suitably controlled by a system controller on the basis of the sensor measurements in the course of operation. Evidently, a manual control may be used alternatively, wherein corrections are likely to be made only subsequent to an operation run.
Fig. 4 and 5 moreover both indicate sensors in the system, more particuarly a flow sensor F, a temperature sensor T, a pressure sensor P, level sensors L and a salinity sensor S. These sensors allow investigation of appropriate product quality and control of system stability and operation. Fig. 5 furthermore shows post treatment means. Herein, the distilled water is treated to obtain potable water. A carbondioxide vessel 53 is present, from which carbondioxide may be inserted in the system using valves V9, V10. Furthermore, a marble filter 151 and a UV lamp 152 are provided so as to obtain water that meets all quality standards. It will be understood that the shown post treatment is merely an example and may be left out or replaced with alternative post treatments. It is furthermore indicated that additional filters and check valves may be present in the system, which are known per se and have been left out for sake of clarity.
It is observed that the above mentioned valves are suitable for use for protection and control of the system, and are claimed as separate features of the present invention.
In preliminary experiments with a system as shown in Fig 5, a cooling liquid input of 15 liter per minute was used at atmospheric pressure. After passing the condenser, 20% thereof was recirculated to become feed 7. This feed was heated to 70 oC and its pressure was lowered to approximately 0.3 bar. As a result, 0,8 liter per minute of distillate was obtained. The system pressure applied through the vacuum pump was 75 mbar. A further increase of the distillate output to 70 liter per hour (1,2 liter per minute) was obtained by means of optimization of the temperature and underpressure of the two-phase feed 7+107. Use was made both potable water and sea water for test purposes, which led to virtually identical results with respect to stability and product output.
A third embodiment is shown in Fig. 6. This embodiment is deemed beneficial for water treatment systems particularly suitable for the production of a larger distillate production, for instance a distillate production of at least 250 liter output per hour and more preferably at least 400 liter output per hour. In accordance with this embodiment, the cooling liquid 47 passes the cooling channel of the condenser 42 to become a warmed-up cooling liquid flow 49. Part 49a of this flow 49 is transmitted to heat exchanger 34, so as to become feed 7. Another part 49b of the warmed-up cooling liquid flow 49 is pumped away to an output by means of pump 45. A protection valve V11 is present so as to prevent flow in an opposite direction. The pump is suitably a pump suitable for a liquid medium.
The pressure defined on the cooling liquid flow part is 100-500 mbar, suitably 200-400 bar and preferably in the range of 250-350 mbar, for instance 300 mbar. This pressure on part 49b results, in combination with an appropriate setting for valve or restriction V1 to a pressure of 600-900 mbar, suitably 700-800 mbar, for instance 750 mbar in the condenser.
No cooling liquid flows in this embodiment into the brine vessel 37. The low pressure applied by vacuum pump 38 to the condenser channel of the condenser 42 is also in this embodiment transmitted to the brine vessel 37. The resulting pressure difference between the last stage 116 and the brine vessel ensures that brine will flow into the brine vessel 37. The brine vessel 37 is herein dimensioned such that the frequency controlled brine pump 35 will operate appropriately, either continuously, or in intervals. In order to operate in intervals, a valve could be added at the bottom of the brine vessel 37. Alternatively, the pump 35 could work as a valve or a valve could be coupled thereto.
A line 105 is added between the vacuum line 101 and the outlet pipe 109 from the brine vessel. This line has a double function. First, it ensures that the low pressure applied to the condenser channel of the condenser 42 is not only applied to a top side of the brine vessel, but also to the outlet pipe 109. This leads to better pressure equilibration, and therewith increases the stability of the overall system. Secondly, the brine vessel and also the condenser itself can generate vapour that is sucked out by the vacuum lines connected to the brine vessel and condenser. This vapour tends to condense in the vacuumlines, forming water droplets that can hinder the operation of the vacuum pump. Line 105 with valve V12 acts as a trap for these droplets, releasing them into the brinestream when the brine pump is pumping. With this installation only condensed vapour can be removed; any vapour in the vacuumlines that does not condense is taken out by the vacuum pump. Valve V12 will only open when there is a water column on top of it (condens) that is higher than the water column on top of the lower level sensor inside the brine vessel. So the condens-trapping system needs to collect a certain amount of condens before it can be pumped out of the system by the brine pump.
As indicated, the embodiment of Fig. 6 makes use of a frequency-controlled brine pump.
One advantage hereof is an increase of the flow rate. This helps to use a continuous or semicontinuous pumping rather than a batch-wise pumping. For instance, for a system with an output of 0.5 m³ per hour, the brine flow is around 20 liters per minute in the start-up phase. However, after start-up, at a steady-state production, the brine flow decreases significantly, for instance with 30-70%. Such reduction would likely lead to a repeated on- and off-switching of the pump, while cavitation is particularly to occur at switching the pump on. Adding warmed-up cooling liquid therefore reduces differences in flow (at least relatively) through the brine pump between start-up phase and steady-state production. Moreover, it increases the flow anyhow. The frequencycontrolled
brine pump can thus more easily be operated continuously or semi-continuously.
It is observed that frequency pumping is shown both in Fig. 5 and in Fig. 6 and is suitably combined, as shown in Fig. 5, with the configuration wherein at least part of the warmed-up cooling liquid is transported, after passing the condenser module to the brine collector vessel, so as to thin the non-evaporated and concentrated feed. The addition of cooling liquid reduces temperature and concentration of the brine. As a result, the liquid in the brine collector vessel may be pumped more easily. Moreover, this reduces a risk of corrosion and of crystallization of salts in the course of pumping, or particularly, when some brine is left behind in the pump after pumping. Furthermore, in view of reduced temperature, the vapour pressure of the brine may be increased, therewith reducing the possibility of cavitation effects in the brine flow.

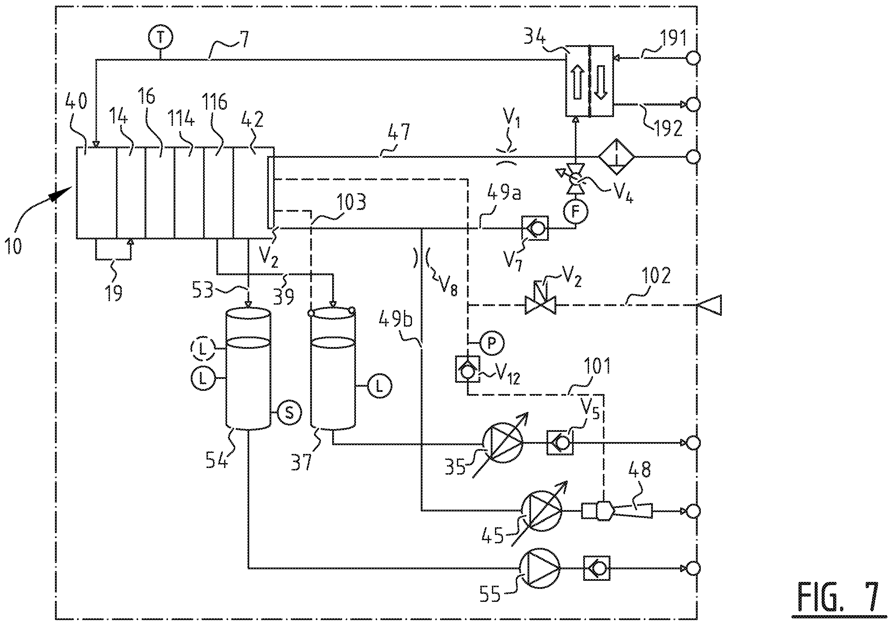

Fig. 7 shows a further embodiment comprising a jet pump 48. Jet pumps are fed with a water flow of predefined pressure and volume and are capable of providing an air pressure and volume displacement. Jet pumps are particularly attractive for larger volumes, since then an electrical vacuum pump is expensive and requires a significant energy consumption. The jet pumps, which are also but less appropriately referred to as venturi pumps, are for instance known from the product catalogue "Körting Liquid Jet Liquid Ejectors" from Körting Hannover AG, Badenstedler StraBe 56, D- 30453 Hannover.
Similar to the embodiment of Fig. 6, the open cooling system comprises a network for the warmedup
cooling liquid 49 with a first connection 49a for use as a feed, and with a second connection 49b for disposal via a separate pump 45. Though the pump 45 is shown to be a frequency controlled pump, this is not deemed necessary. The pump 45 typically is designed for pumping from an underpressure, for instance in the order of 200-500 mbar, to an overpressure, for instance in the order of 1.5-3 bar, more preferably 2-2.5 bar. This high pressure is then used as a driving force for the jet pump 48. The jet pump 48 is herein used as the system's vacuum pump. A vacuum line 101 extends from the jet pump 48 to the vapour channel of the condenser module 42 of the physically integrated modular assembly comprising a heat transfer module 40, distillation modules 14, 16, 114, 116 and further the condenser module 42. The underpressure in the vapour channel of the condenser module 42, typically in the order of 50-90 mbar, is then communicated to the brine collector vessel 37 via pressure communication means 103.
For reasons of clarity, it is added that the valves V1, V8 are shown in this Figure as restrictions. Such implementation is advantageous in view of its robustness and simplicity, but not strictly necessary.

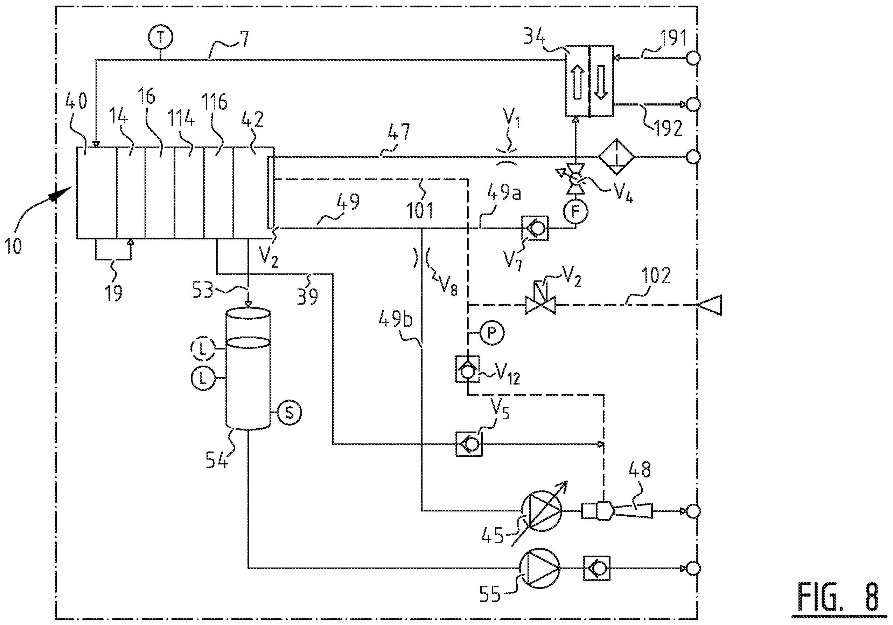

Fig. 8 shows a further embodiment comprising again a jet pump 48. Herein, the jet pump 48 not only acts as the system's vacuum pump so as to apply an underpressure to the vapour channel of the condenser module 42 via vacuum line 101. The jet pump 48 furthermore acts as a brine pump. The brine outlet pipe 39 thereto is coupled to the vacuum line 101 adjacent to the jet pump, so that the brine 39 is sucked into the jet pump 48 together with any air from the vacuum line 101. The jet pump is in this embodiment suitably designed so as to remove a liquid flow. Moreover, this embodiment has the advantage that the brine collector vessel may be left out.

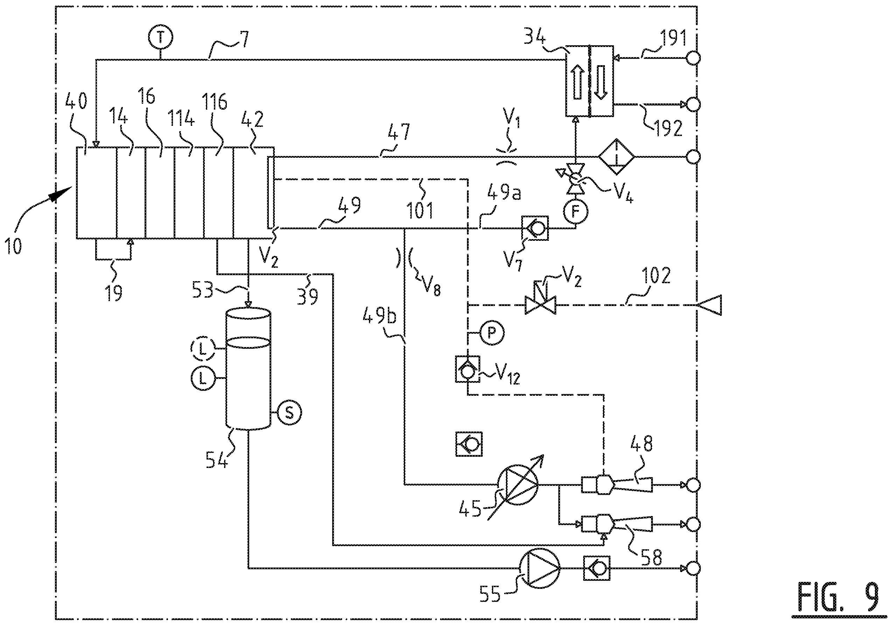

Fig. 9 shows again a further embodiment with a jet pump. In this embodiment, a first jet pump 48 is present to act as the system's vacuum pump. A second jet pump 58 is present to act as the brine pump.
Experiments with the system as shown in Fig. 9 have shown that it operates with cooling liquid in a large variety of temperature ranges, from room temperature up to 38 °C. The operation with cooling liquid at higher temperatures is not excluded. The system operation was found to be stable, with the cooling liquid of 38 °C. Pressure in the condenser module and temperature of the steam of the feed became somewhat higher. The distillate output was approximately 10% lower than in operation with cooling liquid of 20 °C. This reduction in distillate output is considered marginal.. It is believed that the jetpump is capable of condensing vapour that comes out of the vacuum system. When running at high cooling liquid temperatures, the condenser does not condense all steam entering from the last stage. The remaining non-condensed steam is then withdrawn via the pressue communication means and the vacuum line 101, on the basis of the low pressure exerted by the pump 45. When a conventional vacuum pump was used, of the type indicated in Fig. 4-6, the vacuum pump "choked" on this steam, causing a raise in vacuum pressure and a possible run-off of the complete system. However, when ajetpump was used, this raise in vacuum pressure was not found. This is deemed due to condensation of said steam, thus maintaining the vacuum levels in the complete system.
It is believed that the jet pump cools the coolinq liquid and may show an additional pumping effect due to condensation of evaporated cooling liquid in the jet pump.

This result is found to be surprising in comparison to the use of a conventional vacuum pump.

Such a conventional vacuum pump does not work with cooling liquid with elevated temperature. If the cooling reduces in a system with a conventional vacuum pump, vapour (e.g. steam) will remain in the condenser module. This will be drawn into the vacuum system, i.e. any lines for pressure communication that are coupled to and operating by the vacuum pump. This vapour ends up in the vacuum pump, resulting in a reduction of pumping force, which brings about a pressure increase (loss of underpressure) in the system. This merely increases the issue, leading in the end to a cancellation of the pressure difference, and hence termination of distillate production.

While all of the Figures 2-9 show embodiments wherein the feed is pretreated and used for the heat generation to the heat transfer module, this is not essential for the present invention, and alternatives or variations may be envisaged.

## Claims

1. A membrane distillation process wherein distillate is generated from a feed by means of evaporation to vapour in a first liquid channel (12), which vapour is removed through a membrane and subsequently condensed in a vapour channel (21), wherein heat transfer occurs from the vapour channel (21) to any subsequent liquid channel (12), and wherein the evaporation of feed in the first liquid channel (12) occurs upon heat transfer from a heating channel (21) in which a vapour flow condenses,
wherein the generation of the distillate comprises steps of:
- applying a system underpressure (F) to at least one of the modules (42) of the system, which system underpressure (F) is forwarded to other modules (14, 16, 14, 116) through pressure communication (104);
- transferring heat into the heating channel (21), that is separated by a wall (24) from an adjacent liquid channel (12) of a first membrane distillation module (14);
- providing feed to a fluid entry (8) of the first membrane distillation module (14), said feed entering the liquid channel (12) and being heated by means of the transferred heat transmitted from the heating channel (21) so as to evaporate feed liquid to vapour that may pass through a substantially fluid-impermeable, vapor permeable membrane (20) into a vapor space (23) coupled to a subsequent vapour channel (21);
- generating distillate and transferring heat to an adjacent liquid channel (12) by means of condensation of the vapour passed into the subsequent vapour channel (21);
- repeatedly, in dependence of the number of distillation modules (14, 16, 114, 116) in use, transferring non-evaporated feed of the preceding membrane distillation module (14, 16, 114) to a subsequent membrane distillation module (16, 114, 116), and generating distillate from vapour passed into a subsequent vapour channel (21), therewith transferring heat to a adjacent liquid channel (12), wherein the distillate of the last membrane distillation module is generated in a vapour channel of a condenser module (42) against a cooling fluid running in a cooling channel of the condenser module (42),
wherein an underpressure is applied to an outlet (49) of the cooling channel, so that the cooling liquid is sucked through the condenser module (42) by means of a pressure difference between an inlet (47) and the outlet (49) of the cooling channel of the condenser module (42), and
wherein the non-evaporated and concentrated feed (39) flowing from the last membrane distillation module (116) is diluted with at least part (49b) of the cooling liquid (49) that has passed the condenser module (42), and is then pumped away.

2. The membrane distillation process as claimed in claim 1, wherein any non-evaporated and concentrated feed is transferred to a brine collector vessel (37), and wherein furthermore at least part of the cooling liquid is transferred into the brine collector vessel (37) after passing the cooling channel of the condenser module (42), and wherein liquid from the brine collector vessel (37) is pumped to a higher pressure in the pumping step.

3. The membrane distillation process as claimed in Claim 2, wherein the application of the underpressure to the outlet of the cooling channel is carried out by application of a further underpressure to the brine collector vessel (37) and by pressure communication along a path of the warmed up cooling liquid (49) between the outlet of the cooling channel and the brine collector vessel (37), which warmed up cooling liquid (49) is the cooling liquid that has passed the cooling channel of the condenser module (42).

4. The membrane distillation process as claimed in Claim 3, wherein the further underpressure is applied to the brine collector vessel (37) through pressure communication (103) from the vapour channel of the condenser module (42).

5. The membrane distillation process as claimed in Claim 4, comprising the step of preventing flow of liquid from the brine collector vessel (37) into the vapour channel of the condenser module (42) during or following a current interruption using an automatically closing valve (V2) in case of current interruption that is arranged in the line (49) for the warmed up cooling liquid.

6. The membrane distillation process as claimed in any of the claims 2-5, wherein the pumping is continuous or semi-continuous and is carried out by means of a frequency controlled pump (35).

7. The membrane distillation process as claimed in any of the preceding Claims, wherein the pumping of the warmed-up cooling liquid (49b) comprises a first pumping step (45) from the second underpressure to an overpressure, and a second pumping step to atmospheric pressure by means of a jet pump (48, 58), and wherein the non-evaporated and concentrated feed (39) is pumped away by means of the jet pump (58).

8. The membrane distillation process as claimed in Claim 7, wherein the system underpressure (F) is applied to the at least one module (42) of the system by means of the jet pump (48):

9. The membrane distillation process as claimed in Claims 7 or 8, wherein the second pumping step is carried out with a first and a second jet pump (48, 58), and wherein the first jet pump (58) pumps away the non-evaporated and concentrated feed (39) mixed with the cooling liquid (49b) and wherein the second jet pump (48) generates the system underpressure.

10. The membrane distillation process as claimed in any of the preceding claims, wherein at least part of the warmed up cooling liquid (49a) that has passed the condenser (42), is used as a source for the feed (7).

11. The membrane distillation process as claimed in any of the preceding claims wherein a pressure difference between the vapour channel and the cooling channel in the condenser module (42) is set to a maximum by means of a restriction device (V1).

12. A membrane distillation system (10), in which system, in use, a feed (7) is converted into distillate and non-evaporated, concentrated feed (39), which system comprises:
- means (38, 48, 101) for applying an underpressure (F) to at least one module (42) of the system (10), which underpressure is forwarded to other modules (14, 16, 114, 116) through pressure communication (104);
- a heat transfer means (40) for the transfer heat into a heating channel (21), that is separated by a wall (24) from an adjacent liquid channel (12);
- a series of membrane distillation modules (14,16, 114, 116), a first (14) of which comprises the heating channel (21), the wall (24) and the liquid channel (12), further comprising a feed entry (8) and a feed exit (9) and a substantially fluid-impermeable, vapor permeable membrane (20) between said liquid channel (12) and a vapor space (23), which vapor space (23) is coupled to a vapour channel (21) of a subsequent module (16), said vapour channel (21) being provided with a condensation wall (24) separating the vapour channel (21) from a liquid channel (12) of the subsequent module (16);
- a condenser module (42), which comprises a vapour channel for receiving said vapour, a condensation wall, and a cooling channel through which, in use, a cooling liquid (47) flows, wherein in use feed (7) enters the liquid channel (12) through the feed entry (8) and is heated by means of the transferred heat transmitted from the heating channel (21) so as to evaporate feed liquid to vapour that may pass through the membrane (20) into a vapor space (23) coupled to a subsequent vapour channel (21) for condensation at a condensation wall (24), so as to generate distillate and transfer heat to an adjacent liquid channel (12) of a subsequent module (16), which distillate is generated in the at least one membrane distillation modules (14, 16, 114, 116) and in the condenser module (42),
wherein the cooling channel constitutes part of an open cooling system, in which cooling liquid flows in use from an inlet to an outlet (37, under suction by means of a pressure difference, and wherein the outlet is held in use at an underpressure and wherein a pumping means (35, 45, 48, 58) is present for pumping cooling liquid (49) at the outlet from the said underpressure at the outlet to a higher pressure, and
wherein the system is configured for dilution of non-evaporated and concentrated feed (39) flowing from the last membrane distillation module (116) with at least part (49b) of the cooling liquid (49) that has passed the condenser module (42), and for pumping away of the thus diluted non-evaporated feed (39).

13. The system as claimed in Claim 12, wherein the outlet is a brine collector vessel (37), into which the warmed-up cooling liquid (49, 49b) is mixed with non-evaporated and concentrated feed (39) from the last membrane distillation module (116).

14. The system as claimed in Claim 12 or 13, wherein pressure communication means (103) are present for communication of the underpressure in the vapour channel of the condenser module (42) to the brine collector vessel (37).

15. The membrane distillation system as claimed in Claim 14, further comprising a protection device (V2) for preventing flow of liquid from the brine collector vessel (37) into the vapour channel of the condenser module (42) during or following a current interruption.

16. The membrane distillation system as claimed in Claim 12, wherein the pumping means (45, 48, 58) comprise a first pump (45) for pumping the warmed up cooling liquid (49) from the second underpressure to an overpressure and wherein the pumping means further comprise a jet pump (48, 58) for pumping the cooling liquid (49) from the overpressure to atmospheric pressure.

17. The membrane distillation system as claimed in Claim 16, wherein the jet pump (48) is comprised in the means for applying the underpressure (48, 101).

18. The system as claimed in Claim 17, wherein the pumping means (45, 48, 58) comprise a parallel arrangement of a first and a second jet pump (48, 58), wherein the first jet pump (58) is configured for pumping the non-evaporated and concentrated feed (39) and the cooling liquid (49b), and wherein the second jet pump (48) is configured for pumping cooling liquid (49b) and for application of the system underpressure.

19. The membrane distillation system as claimed in any of the preceding Claims 12-18, wherein the condenser (42) has a foil-based condensation wall between the vapour channel and the cooling channel, and wherein a protection device (V1) is present for setting a maximum to a pressure difference over the foil-based condensation wall.

20. The membrane distillation system as claimed in any of the preceding claims 12-19, wherein the at least one distillation module (14, 16, 114, 116) and the condenser module (42) are of modular design and physically integrated into an assembly (10).

21. The membrane distillation system as claimed in Claim 20, wherein the heat transfer means (40) are embodied as a heat transfer module of modular design, which is physically integrated into the assembly (10).

22. The membrane distillation system as claimed in any of the preceding claims 12-21, wherein the open cooling system comprises a network with a first connection (49b) to the outlet and a second connection (49a) to a feed inlet of the system, further comprising regulating means (V8) for setting a flow ratio between the first connection (49b) and the second connection (49a).

## Patentansprüche

1. Membrandestillationsprozess, wobei Destillat von einer Zufuhr mittels Verdampfung zu Dampf in einem ersten Flüssigkeitskanal (12) erzeugt wird, wobei Dampf durch eine Membran entfernt und anschließend in einem Dampfkanal (21) kondensiert wird, wobei eine Wärmeübertragung von dem Dampfkanal (21) zu einem nachfolgenden Flüssigkeitskanal 12) stattfindet, und wobei die Verdampfung der Zufuhr in dem ersten Flüssigkeitskanal (12) bei Wärmeübertragung von einem Heizkanal (21), in welchem eine Dampfströmung kondensiert, stattfindet,
wobei die Erzeugung des Destillats die Schritte umfasst:
- Aufbringen eines Systemunterdrucks (F) auf zumindest eines der Module (42) des Systems, wobei der Systemunterdruck (F) zu anderen Modulen (14, 16, 14, 116) durch Druckkommunikation (104) geliefert wird;
- Übertragen von Wärme in den Heizkanal (21), der durch eine Wand (24) von einem benachbarten Flüssigkeitskanal (12) eines ersten Membrandestillationsmoduls (14) getrennt ist;
- Bereitstellen einer Zufuhr zu einem Fluideintritt (8) des ersten Membrandestillationsmoduls (14), wobei die Zufuhr in den Flüssigkeitskanal (12) eintritt und mittels der übertragenen Wärme, die von dem Heizkanal (21) übermittelt wird, erwärmt wird, um so die Zufuhrflüssigkeit zu Dampf zu verdampfen, der durch eine im Wesentlichen fluidundurchlässige, dampfdurchlässige Membran (20) in einen Dampfraum (23) strömen kann, der mit einem nachfolgenden Dampfkanal (21) gekoppelt ist;
- Erzeugen von Destillat und Übertragen von Wärme zu einem benachbarten Flüssigkeitskanal (12) mittels Kondensation des in den nachfolgenden Dampfkanal (21) geströmten Dampfes;
- in Abhängigkeit der Anzahl von Destillationsmodulen (14, 16, 114, 116) im Gebrauch wiederholtes Übertragen von nicht verdampfter Zufuhr des vorhergehenden Membrandestillationsmoduls (14, 16, 114) zu einem nachfolgenden Membrandestillationsmodul (16, 114, 116) und Erzeugen von Destillat aus in einen nachfolgenden Dampfkanal (21) geströmten Dampf, wodurch Wärme an einen benachbarten Flüssigkeitskanal (12) übertragen wird, wobei das Destillat des letzten Membrandestillationsmoduls in einem Dampfkanal eines Kondensatormoduls (42) gegen eine Kühlflüssigkeit erzeugt wird, die in einem Kühlkanal des Kondensatormoduls (42) strömt,
wobei ein Unterdruck an einen Auslass (49) des Kühlkanals aufgebracht wird, so dass die Kühlflüssigkeit durch das Kondensatormodul (42) mittels einer Druckdifferenz zwischen einem Einlass (47) und dem Auslass (49) des Kühlkanals des Kondensatormoduls (42) gesaugt wird, und wobei die nicht verdampfte und konzentrierte Zufuhr (39), die aus dem letzten Membrandestillationsmodul (116) strömt, mit zumindest einem Teil (49b) der Kühlflüssigkeit (49) verdünnt wird, die durch das Kondensatormodul (42) geströmt ist, und dann weggepumpt wird.

2. Membrandestillationsprozess nach Anspruch 1,
wobei nicht verdampfte und konzentrierte Zufuhr zu einem Solesammelbehälter (37) übertragen wird, und wobei ferner zumindest ein Teil der Kühlflüssigkeit in den Solesammelbehälter (37) nach Durchgang durch den Kühlkanal des Kondensatormoduls (42) übertragen wird, und wobei Flüssigkeit von dem Solesammelbehälter (37) bei dem Pumpschritt auf einen höheren Druck gepumpt wird.

3. Membrandestillationsprozess nach Anspruch 2,
wobei das Aufbringen des Unterdruckes auf den Auslass des Kühlkanals durch Aufbringen eines weiteren Unterdruckes auf den Solesammelbehälter (37) und durch Druckkommunikation entlang eines Pfades der erwärmten Kühlflüssigkeit (49) zwischen dem Auslass des Kühlkanals und dem Solesammelbehälter (37) ausgeführt wird, wobei die aufgewärmte Kühlflüssigkeit (49) diejenige Kühlflüssigkeit ist, die durch den Kühlkanal des Kondensatormoduls (42) geströmt ist.

4. Membrandestillationsprozess nach Anspruch 3,
wobei der weitere Unterdruck auf den Solesammelbehälter (37) durch Druckkommunikation (103) von dem Dampfkanal des Kondensatormoduls (42) aufgebracht wird.

5. Membrandestillationsprozess nach Anspruch 4,
mit dem Schritt, eine Strömung von Flüssigkeit von dem Solesammelbehälter (37) in den Dampfkanal des Kondensatormoduls (42) während oder nach einer Stromunterbrechung unter Verwendung eines automatisch schließenden Ventils (V2) in dem Fall einer Stromunterbrechung zu verhindern, die in der Leitung (49) für die erwärmte Kühlflüssigkeit angeordnet ist.

6. Membrandestillationsprozess nach einem der Ansprüche 2 bis 5,
wobei das Pumpen kontinuierlich oder halbkontinuierlich erfolgt und mittels einer frequenzgesteuerten Pumpe (35) ausgeführt wird.

7. Membrandestillationsprozess nach einem der vorhergehenden Ansprüche, wobei das Pumpen der erwärmten Kühlflüssigkeit (49b) einen ersten Pumpschritt (45) von dem zweiten Unterdruck auf einen Überdruck und einen zweiten Pumpschritt auf atmosphärischen Druck mittels einer Strahlpumpe (48, 58) umfasst, und wobei die nicht verdampfte und konzentrierte Zufuhr (39) mittels der Strahlpumpe (58) weggepumpt ist.

8. Membrandestillationsprozess nach Anspruch 7,
wobei der Systemunterdruck (F) auf das zumindest eine Modul (42) des Systems mittels der Strahlpumpe (48) aufgebracht wird.

9. Membrandestillationsprozess nach einem der Ansprüche 7 oder 8,
wobei der zweite Pumpschritt mit einer ersten und einer zweiten Strahlpumpe (48, 58) ausgeführt wird, und wobei die erste Strahlpumpe (58) die nicht verdampfte und konzentrierte Zufuhr (39), die mit der Kühlflüssigkeit (49b) gemischt ist, wegpumpt, und wobei die zweite Strahlpumpe (48) den Systemunterdruck erzeugt.

10. Membrandestillationsprozess nach einem der vorhergehenden Ansprüche, wobei zumindest ein Teil der erwärmten Kühlflüssigkeit (49a), die durch den Kondensator (42) geströmt ist, als eine Quelle für die Zufuhr (7) verwendet ist.

11. Membrandestillationsprozess nach einem der vorhergehenden Ansprüche, wobei eine Druckdifferenz zwischen dem Dampfkanal und dem Kühlkanal in dem Kondensatormodul (42) mittels einer Beschränkungsvorrichtung (V1) auf ein Maximum festgelegt ist.

12. Membrandestillationssystem (10), wobei in dem System in Gebrauch eine Zufuhr (7) in ein Destillat und eine nicht verdampfte konzentrierte Zufuhr (39) umgewandelt wird, wobei das System umfasst:
- ein Mittel (38, 48, 101) zum Aufbringen eines Unterdruckes (F) auf zumindest ein Modul (42) des Systems (10), wobei der Unterdruck durch Druckkommunikation (104) an andere Module (14, 16, 114, 116) geliefert wird;
- ein Wärmeübertragungsmittel (40) für die Übertragung von Wärme in einen Heizkanal (21), der durch eine Wand (24) von einem benachbarten Flüssigkeitskanal (12) getrennt ist;
- eine Reihe Membrandestillationsmodulen (14, 16, 114, 116), von denen ein erstes (14) den Heizkanal (21), die Wand (24) und den Flüssigkeitskanal (12) umfasst, ferner mit einem Zufuhreintritt (8) und einem Zufuhraustritt (9) und einer im Wesentlichen fluidundurchlässigen, dampfdurchlässigen Membran (20) zwischen dem Flüssigkeitskanal (12) und einem Dampfraum (23), wobei der Dampfraum (23) mit einem Dampfkanal (21) eines nachfolgenden Moduls (16) gekoppelt ist, wobei der Dampfkanal (21) mit einer Kondensationswand (24) versehen ist, die den Dampfkanal (21) von einem Flüssigkeitskanal (12) des nachfolgenden Moduls (16) trennt;
- ein Kondensatormodul (42), das einen Dampfkanal zur Aufnahme des Dampfes, eine Kondensationswand und einen Kühlkanal umfasst, durch den im Gebrauch eine Kühlflüssigkeit (47) strömt, wobei im Gebrauch eine Zufuhr (7) in den Flüssigkeitskanal (12) durch den Zufuhreintritt (8) eintritt und mittels der übertragenen Wärme, die von dem Heizkanal (21) übermittelt wird, erwärmt wird, um so eine Zufuhrflüssigkeit zu Dampf zu verdampfen, der durch die Membran (20) in einen Dampfraum (23), der mit einem nachfolgenden Dampfkanal (21) gekoppelt ist, zur Kondensation an einer Kondensationswand (24) strömen kann, um Destillat zu erzeugen und Wärme an einen benachbarten Flüssigkeitskanal (12) eines nachfolgenden Moduls (16) zu übertragen, wobei das Destillat in dem zumindest einen Membrandestillationsmodul (14, 16, 114, 116) und in dem Kondensatormodul (42) erzeugt wird,
wobei der Kühlkanal einen Teil eines offenen Kühlsystems bildet, in welchem die Kühlflüssigkeit im Gebrauch von einem Einlass zu einem Auslass (37) unter Saugwirkung mittels einer Druckdifferenz strömt, und wobei der Auslass in Gebrauch bei einem Unterdruck gehalten wird, und wobei ein Pumpmittel (35, 45, 48, 58) zum Pumpen von Kühlflüssigkeit (49) an dem Auslass von dem Unterdruck an dem Auslass zu einem höheren Druck vorhanden ist, und
wobei das System zur Verdünnung von nicht verdampfter und konzentrierter Zufuhr (39), die aus dem letzten Membrandestillationsmodul (116) strömt, mit zumindest einem Teil (49b) der Kühlflüssigkeit (49), die durch das Kondensatormodul (42) geströmt ist, und zum Wegpumpen der somit verdünnten nicht verdampften Zufuhr (39) konfiguriert ist.

13. System nach Anspruch 12,
wobei der Auslass ein Solesammelbehälter (37) ist, in welchem die erwärmte Kühlflüssigkeit (49, 49b) mit nicht verdampfter und konzentrierter Zufuhr (39) von dem letzten Membrandestillationsmodul (116) gemischt ist.

14. System nach einem der Ansprüche 12 oder 13,
wobei ein Druckkommunikationsmittel (103) zur Kommunikation des Unterdrucks in dem Dampfkanal des Kondensatormoduls (42) zu dem Solesammelbehälter (37) vorhanden ist.

15. Membrandestillationssystem nach Anspruch 14,
ferner mit einer Schutzvorrichtung (V2), um ein Strömen von Flüssigkeit von dem Solesammelbehälter (37) in den Dampfkanal des Kondensatormoduls (42) während oder nach einer Stromunterbrechung zu verhindern.

16. Membrandestillationssystem nach Anspruch 12,
wobei das Pumpmittel (45, 48, 58) eine erste Pumpe (45) zum Pumpen der erwärmten Kühlflüssigkeit (49) von dem zweiten Unterdruck auf einen Überdruck umfasst, und wobei das Pumpmittel ferner eine Strahlpumpe (48, 58) zum Pumpen der Kühlflüssigkeit (49) von dem Überdruck auf atmosphärischen Druck umfasst.

17. Membrandestillationssystem nach Anspruch 16,
wobei die Strahlpumpe (48) in dem Mittel zum Aufbringen des Unterdrucks (48, 101) umfasst ist.

18. System nach Anspruch 17,
wobei das Pumpmittel (45, 48, 58) eine parallele Anordnung einer ersten und einer zweiten Strahlpumpe (48, 58) umfasst, wobei die erste Strahlpumpe (58) zum Pumpen der nicht verdampften und konzentrierten Zufuhr (39) und der Kühlflüssigkeit (49b) konfiguriert ist, und wobei die zweite Strahlpumpe (48) zum Pumpen von Kühlflüssigkeit (49b) und zur Aufbringung des Systemunterdrucks konfiguriert ist.

19. Membrandestillationssystem nach einem der Ansprüche 12 bis 18, wobei der Kondensator (42) eine folienbasierte Kondensationswand zwischen dem Dampfkanal und dem Kühlkanal aufweist, und wobei eine Schutzvorrichtung (V1) zum Festlegen eines Maximums auf eine Druckdifferenz über der folienbasierten Kondensationswand vorhanden ist.

20. Membrandestillationssystem nach einem der Ansprüche 12 bis 19, wobei das zumindest eine Destillationsmodul (14, 16, 114, 116) und das Kondensatormodul (42) von modularem Aufbau und physikalisch in eine Baugruppe (10) integriert sind.

21. Membrandestillationssystem nach Anspruch 20,
wobei das Wärmeübertragungsmittel (40) als ein Wärmeübertragungsmodul mit modularer Konstruktion ausgeführt ist, das physikalisch in die Baugruppe (10) integriert ist.

22. Membrandestillationssystem nach einem der Ansprüche 12 bis 21, wobei das offene Kühlsystem ein Netzwerk mit einer ersten Verbindung (49b) zu dem Auslass und einer zweiten Verbindung (49a) zu einem Zufuhreinlass des Systems umfasst, ferner mit einem Regulierungsmittel (V8) zum Festlegen eines Durchflussverhältnisses zwischen der ersten Verbindung (49b) und der zweiten Verbindung (49a).

## Revendications

1. Procédé de distillation à membrane dans lequel un distillat est généré à partir d'un produit entrant au moyen d'une évaporation en vapeur dans un premier canal à liquide (12), ladite vapeur étant évacuée à travers une membrane et ensuite condensée dans un canal à vapeur (21), dans lequel un transfert de chaleur se produit depuis le canal à vapeur (21) vers tout canal à liquide successif (12), et dans lequel l'évaporation du produit entrant dans le premier canal à liquide (12) se produit lors d'un transfert de chaleur depuis un canal de chauffage (21) dans lequel un courant de vapeur est condensé,
dans lequel la génération du distillat comprend les étapes consistant à :
- appliquer une dépression (F) systémique à l'un au moins des modules (42) du système, ladite dépression systémique (F) étant transmise à d'autres modules (14, 16, 114, 116) par communication de pression (104) ;
- transférer de la chaleur vers le canal de chauffage (21), qui est séparé par une paroi (24) depuis un canal à liquide adjacent (12) d'un premier module de distillation à membrane (14) ;
- fournir un produit entrant à l'entrée de fluide (8) du premier module de distillation à membrane (14), ledit produit entrant pénétrant dans le canal à liquide (12) et étant chauffé au moyen de la chaleur transférée transmise depuis le canal de chauffage (21) de manière à évaporer le liquide du produit entrant en vapeur qui peut passer à travers une membrane sensiblement imperméable au fluide et perméable à la vapeur (20) jusque dans un espace à vapeur (23) couplé à un canal à vapeur successif (21) ;
- générer le distillat et transférer la chaleur vers un canal à liquide adjacent (12) au moyen d'une condensation de la vapeur qui est passée dans le canal à vapeur successif (21) ;
- répéter, en fonction du nombre de modules de distillation (14, 16, 114, 116) en utilisation, le transfert du produit entrant non évaporé du module de distillation à membrane précédent (14, 16, 114) vers un module de distillation à membrane successif (16, 114, 116), et générer un distillat à partir de la vapeur qui est passée dans un canal à vapeur successif (21), en transférant avec celle-ci de la chaleur à un canal à liquide adjacent (12), dans lequel le distillat du dernier module de distillation à membrane est généré dans un canal à vapeur d'un module de condenseur (42) à l'encontre d'un fluide de refroidissement qui circule dans un canal de refroidissement du module de condenseur (42), dans lequel une dépression est appliquée à une sortie (49) du canal de refroidissement, de sorte que le liquide de refroidissement est aspiré à travers le module de condenseur (42) au moyen d'une différence de pression entre une entrée (47) et la sortie (49) du canal de refroidissement du module de condenseur (42), et
dans lequel le produit entrant non évaporé et concentré (39) qui s'écoule depuis le dernier module de distillation à membrane (116) est dilué avec au moins une partie (49b) du liquide de refroidissement (49) qui est passé par le module de condenseur (42), et est ensuite évacué par pompage.

2. Procédé de distillation à membrane selon la revendication 1, dans lequel tout produit entrant non évaporé et concentré est transféré à un récipient collecteur de saumure (37), et dans lequel au moins une partie du liquide de refroidissement est en outre transférée dans le récipient collecteur de saumure (37) après être passée par le canal de refroidissement du module de condenseur (42), et dans lequel le liquide venant du récipient collecteur de saumure (37) est pompé à une pression plus élevée dans l'étape de pompage.

3. Procédé de distillation à membrane selon la revendication 2, dans lequel l'application de la dépression à la sortie du canal de refroidissement est effectuée par application d'une autre dépression au récipient collecteur de saumure (37) et par communication de pression le long d'un trajet du liquide de refroidissement réchauffé (49) entre la sortie du canal de refroidissement et le récipient collecteur de saumure (37), ledit liquide de refroidissement réchauffé (49) étant le liquide de refroidissement qui est passé par le canal de refroidissement du module de condenseur (42).

4. Procédé de distillation à membrane selon la revendication 3, dans lequel l'autre dépression est appliquée au récipient collecteur de saumure (37) par communication de pression (103) depuis le canal à vapeur du module de condenseur (42).

5. Procédé de distillation à membrane selon la revendication 4, comprenant l'étape consistant à empêcher un écoulement du liquide depuis le récipient collecteur de saumure (37) vers le canal à vapeur du module de condenseur (42) pendant ou à la suite d'une interruption de courant, en utilisant une valve à fermeture automatique (V2) dans le cas d'une interruption de courant, qui est agencée dans la ligne (49) pour le liquide de refroidissement réchauffé.

6. Procédé de distillation à membrane selon l'une quelconque des revendications 2 à 5, dans lequel le pompage est continu ou semi-continu et est effectué au moyen d'une pompe contrôlée en fréquence (35).

7. Procédé de distillation à membrane selon l'une quelconque des revendications précédentes, dans lequel le pompage du liquide de refroidissement réchauffé (49b) comprend une première étape de pompage (45) depuis la seconde dépression vers une surpression, et une seconde étape de pompage à pression atmosphérique au moyen d'une pompe à tuyère (48, 58), et dans lequel le produit entrant non évaporé et concentré (39) est évacué par pompage au moyen de la pompe à tuyère (58).

8. Procédé de distillation à membrane selon la revendication 7, dans lequel la dépression systémique (F) est appliquée audit au moins un module (42) du système au moyen de la pompe à tuyère (48).

9. Procédé de distillation à membrane selon la revendication 7 ou 8, dans lequel la seconde étape de pompage est effectuée avec une première et une seconde pompe à tuyère (48, 58), et dans lequel la première pompe à tuyère (58) évacue par pompage le produit entrant non évaporé et concentré (39) mélangé avec le liquide de refroidissement (49b) et dans lequel la seconde pompe à tuyère (48) génère la dépression systémique.

10. Procédé de distillation à membrane selon l'une quelconque des revendications précédentes, dans lequel au moins une partie du liquide de refroidissement réchauffé (49a) qui est passé par le condenseur (42) est utilisée à titre de source pour le produit entrant (7).

11. Procédé de distillation à membrane selon l'une quelconque des revendications précédentes, dans lequel une différence de pression entre le canal à vapeur et le canal de refroidissement dans le module de condenseur (42) est fixée à un maximum au moyen d'un dispositif de restriction (V1).

12. Système de distillation à membrane (10) dans lequel, en utilisation, un produit entrant (7) est converti en distillat et en produit entrant non évaporé concentré (39), ledit système comprenant :
- un moyen (38, 48, 101) pour appliquer une dépression (F) à au moins un module (42) du système (10), ladite dépression étant transmise à d'autres modules (14, 16, 114, 116) par communication de pression (104) ;
- un moyen de transfert de chaleur (40) pour le transfert de chaleur vers un canal de chauffage (21) qui est séparé par une paroi (24) depuis un canal à liquide adjacent (12) ;
- une série de modules de distillation à membrane (14, 16, 114, 116), dont un premier module (14) comprend le canal de chauffage (21), la paroi (24) et le canal à liquide (12), comprenant en outre une entrée pour produit entrant (8) et une sortie pour produit entrant (9), et une membrane imperméable au fluide et perméable à la vapeur (20) entre ledit canal à liquide (12) et un espace de vapeur (23), ledit espace de vapeur (23) étant couplé à un canal à vapeur (21) d'un module successif (16), ledit canal à vapeur (21) étant pourvu d'une paroi de condensation (24) séparant le canal à vapeur (21) vis-à-vis d'un canal à liquide (12) du module successif (16) ;
- un module de condenseur (42), qui comprend un canal à vapeur pour recevoir ladite vapeur, une paroi de condensation, et un canal de refroidissement à travers lequel un liquide de refroidissement (47) s'écoule en utilisation, dans lequel, en utilisation, un produit entrant (7) entre dans le canal à liquide (12) à travers l'entrée pour produit entrant (8) et est chauffé au moyen de la chaleur transférée transmise depuis le canal de chauffage (21) de manière à évaporer le liquide du produit entrant en vapeur qui peut passer à travers la membrane (20) jusque dans un espace de vapeur (23) couplé à un canal à vapeur successif (21) pour une condensation sur une paroi de condensation (24), de manière à générer un distillat et à transférer de la chaleur à un canal à liquide adjacent (12) d'un module successif (16), ledit distillat étant généré dans ledit au moins un module de distillation à membrane (14, 16, 114, 116) et dans le module de condenseur (42),
dans lequel le canal de refroidissement constitue une partie d'un système de refroidissement ouvert, dans lequel un liquide de refroidissement s'écoule en utilisation depuis une entrée jusqu'à une sortie (37) par succion au moyen d'une différence de pression, et dans lequel la sortie est maintenue en utilisation à une dépression et dans lequel un moyen de pompage (35, 45, 48, 58) est présent pour pomper un liquide de refroidissement (49) à la sortie depuis ladite dépression à la sortie vers une pression plus élevée, et
dans lequel le système est configuré pour diluer le produit alimenté non évaporé et concentré (39) qui s'écoule depuis le dernier module de distillation à membrane (116) avec au moins une partie (49b) du liquide de refroidissement (49) qui est passé par le module de condenseur (42), et pour évacuer par pompage le produit entrant non évaporé ainsi dilué (39).

13. Système selon la revendication 12, dans lequel la sortie est un récipient collecteur de saumure (37), dans lequel le liquide de refroidissement réchauffé (49, 49b) est mélangé avec un produit entrant non évaporé et concentré (39) depuis le dernier module de distillation à membrane (116).

14. Système selon la revendication 12 ou 13, dans lequel un moyen de communication de pression (103) est présent pour une communication de la dépression dans le canal à vapeur du module de condenseur (42) vers le récipient collecteur de saumure (37).

15. Système de distillation à membrane selon la revendication 14, comprenant en outre un dispositif de protection (V2) pour empêcher un écoulement du liquide depuis le récipient collecteur de saumure (37) vers le canal à vapeur du module de condenseur (42) pendant ou à la suite d'une interruption de courant.

16. Système de distillation à membrane selon la revendication 12, dans lequel le moyen de pompage (45, 48, 58) comprend une première pompe (45) pour pomper le liquide de refroidissement réchauffé (49) depuis la seconde dépression jusqu'à une surpression, et dans lequel le moyen de pompage comprend en outre une pompe à tuyère (48, 58) pour pomper le liquide de refroidissement (49) depuis la dépression jusqu'à la pression atmosphérique.

17. Système de distillation à membrane selon la revendication 16, dans lequel la pompe à tuyère (48) est comprise dans le moyen pour appliquer la dépression (48, 101).

18. Système selon la revendication 17, dans lequel le moyen de pompage (45, 48, 58) comprend un agencement parallèle d'une première et d'une seconde pompe à tuyère (48, 58), dans lequel la première pompe à tuyère (58) est configurée pour pomper le produit entrant non évaporé et concentré (39) et le liquide de refroidissement (49b), et dans lequel la seconde pompe à tuyère (48) est configurée pour pomper le liquide de refroidissement (49b), et pour l'application de la dépression systémique.

19. Système de distillation à membrane selon l'une quelconque des revendications 12 à 18, dans lequel le condenseur (42) possède une paroi de condensation d'un type basé sur des feuilles, entre le canal à vapeur et le canal de refroidissement, et dans lequel un dispositif de protection (V1) est présent pour fixer un maximum à une différence de pression sur la paroi de condensation du type basé sur les feuilles.

20. Système de distillation à membrane selon l'une quelconque des revendications 12 à 19,
dans lequel ledit au moins un module de distillation (14, 16, 114, 116) et le module de condenseur (42) sont de conception modulaire et sont physiquement intégrés dans un assemblage (10).

21. Système de distillation à membrane selon la revendication 20, dans lequel le moyen de transfert de chaleur (40) est réalisé sous la forme de module de transfert de chaleur de conception modulaire, qui est physiquement intégré dans l'assemblage (17).

22. Système de distillation à membrane selon l'une quelconque des revendications précédentes 12 à 21,
dans lequel le système de refroidissement ouvert comprend un réseau avec une première connexion (49b) à la sortie et une seconde connexion (49a) à une entrée d'alimentation du système, comprenant en outre un moyen de régulation (V8) pour fixer un rapport de débit entre la première connexion (49b) et la seconde connexion (49a).
